(19) Europäisches Patentamt
European Patent Office
Office européen des brevets

(11) **EP 4 769 578 A1**

(12) **EUROPEAN PATENT APPLICATION**
published in accordance with Art. 153(4) EPC

(43) Date of publication:
01.07.2026 Bulletin 2026/27

(21) Application number: 24892692.5

(22) Date of filing: 09.05.2024

(51) International Patent Classification (IPC):
*H01M 4/64* (2006.01)    *H01M 4/66* (2006.01)
*H01M 10/052* (2010.01)

(52) Cooperative Patent Classification (CPC):
H01M 4/02; H01M 4/13; H01M 4/64; H01M 4/66;
H01M 10/04; H01M 10/052; H01M 10/0525;
H01M 10/054; Y02E 60/10

(86) International application number:
PCT/CN2024/091990

(87) International publication number:
WO 2025/107526 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.11.2023 CN 202311587415

(71) Applicant: Contemporary Amperex Technology
Co., Ltd.
Ningde, Fujian 352100 (CN)

(72) Inventors:
• LIU, Xianghui
Ningde,Fujian 352100 (CN)
• HUANG, Qisen
Ningde,Fujian 352100 (CN)
• LI, Mingling
Ningde,Fujian 352100 (CN)
• LI, Cheng
Ningde,Fujian 352100 (CN)
• CAI, Qiguo
Ningde,Fujian 352100 (CN)

(74) Representative: Gong, Jinping
CocreateIP
Neumarkter Straße 21
81673 München (DE)

(54) **COMPOSITE CURRENT COLLECTOR, ELECTRODE PLATE, SECONDARY BATTERY, AND ELECTRICAL APPARATUS**

(57) A composite current collector (10), an electrode sheet (20), a secondary battery, and an electrical apparatus (6) are provided. The composite current collector (10) includes a polymer support layer (11), an adhesive layer (12), and a conductive layer (13). The adhesive layer (12) is disposed on at least one surface of the polymer support layer (11), and the adhesive layer (12) includes polyimide, inorganic particles, and a binder. The conductive layer (13) is disposed on a surface of the adhesive layer (12) facing away from the polymer support layer (11). The composite current collector (10) of this application has relatively high elongation at break and tensile modulus, and is resistant to wrinkling or shrinking in a tab region of the electrode sheet (20) after an active material layer (21) is applied and dried.

FIG. 4

## Description

### CROSS-REFERENCE

This application incorporates by reference in its entirety Chinese Patent Application No. 202311587415.9, filed on November 24, 2023 and entitled "COMPOSITE CURRENT COLLECTOR, ELECTRODE SHEET, SECONDARY BATTERY, AND ELECTRICAL APPARATUS."

### TECHNICAL FIELD

This application relates to the field of secondary battery technologies, and in particular, to a composite current collector, an electrode sheet, a secondary battery, and an electrical apparatus.

### BACKGROUND

The statements herein merely provide background information related to this application and do not necessarily constitute prior art.

In recent years, with the increasingly wide application of secondary batteries, secondary batteries are extensively used in energy storage power systems such as hydroelectric, thermal, wind, and solar power stations, as well as in various fields including power tools, electric bicycles, electric motorcycles, and electric vehicles.

Due to significant advancements in secondary batteries, higher requirements have been placed on the energy density and safety performance of secondary batteries. Compared to conventional current collectors such as copper foil or aluminum foil, composite current collectors are more conducive to increasing the energy density and safety performance of batteries. However, current composite current collectors suffer from issues such as relatively low elongation at break, relatively low tensile modulus, and a tendency to wrinkle or shrink, which affect subsequent manufacturing processes and battery performance.

Therefore, developing a composite current collector with relatively high elongation at break and tensile modulus, and resistance to wrinkling or shrinking, is one of the key focuses for those skilled in the art.

### SUMMARY

This application is made in view of the above issues, with one of its objectives being to provide a composite current collector that has relatively high elongation at break and tensile modulus and is resistant to wrinkling or shrinking.

To achieve the above objective, a first aspect of this application provides a composite current collector, including:

a polymer support layer;
an adhesive layer disposed on at least one surface of the polymer support layer, and the adhesive layer includes polyimide, inorganic particles, and a binder; and
a conductive layer disposed on a surface of the adhesive layer facing away from the polymer support layer.

The composite current collector of this application bonds the conductive layer to the polymer support layer through the adhesive layer, where the adhesive layer includes polyimide, inorganic particles, and a binder. Through the synergistic effect of polyimide and inorganic particles in the adhesive layer, the tensile modulus of the composite current collector can be effectively improved, and wrinkling or shrinking at the tab region of the composite current collector is mitigated after an active material layer is applied and dried. Furthermore, unlike conventional composite current collectors that the conductive layer is directly formed on the polymer support layer via evaporation or magnetron sputtering, the conductive layer in this composite current collector is bonded to the polymer support layer through the adhesive layer, avoiding significant thermal damage to the polymer support layer caused by evaporation or magnetron sputtering, thereby enabling the composite current collector to have a relatively high elongation at break.

In any embodiment, a mass fraction of the polyimide in the adhesive layer is 30% to 70%, a mass fraction of the inorganic particles is 5% to 10%, and a mass fraction of the binder is 20% to 60%. This can enable the composite current collector to have a high tensile modulus.

In any embodiment, a mass fraction of the polyimide in the adhesive layer is 30% to 55%, a mass fraction of the inorganic particles is 5% to 10%, and a mass fraction of the binder is 35% to 60%. This can further enhance the tensile modulus of the composite current collector, further mitigate wrinkling or shrinking of the composite current collector at the tab region, and also enable a relatively high peel strength between the conductive layer and the polymer support layer.

In any embodiment, a thickness of the adhesive layer is 600 nm to 2000 nm; optionally, 800 nm to 1500 nm. This can better improve the tensile modulus of the composite current collector, better mitigate wrinkling or shrinking at the tab region, and also enable a relatively high peel strength between the conductive layer and the polymer support layer.

In any embodiment, the adhesive layer includes:

a first adhesive sub-layer disposed on at least one surface of the polymer support layer, and the first adhesive sub-layer includes the polyimide, the inorganic particles, and the binder; and

a second adhesive sub-layer disposed on a surface of the first adhesive sub-layer facing away from the polymer support layer, where the conductive layer is disposed on a surface of the second adhesive sub-layer facing away from the first adhesive sub-layer, and the second adhesive sub-layer includes the binder.

This can further enhance the peel strength between the conductive layer and the polymer support layer and further improve the overall tensile modulus of the composite current collector, thereby further mitigating wrinkling or shrinking at the tab region.

In any embodiment, a mass fraction of the polyimide in the first adhesive sub-layer is 60% to 70%, a mass fraction of the inorganic particles is 5% to 10%, and a mass fraction of the binder is 20% to 30%. This can effectively improve the tensile modulus of the composite current collector, effectively mitigate wrinkling or shrinking at the tab region, and also improve the peel strength between the conductive layer and the polymer support layer.

In any embodiment, a thickness of the first adhesive sub-layer is 500 nm to 1500 nm; optionally, 600 nm to 1200 nm. This can better enhance the tensile modulus of the composite current collector and improve the tab welding reliability of the composite current collector.

In any embodiment, a thickness of the second adhesive sub-layer is 300 nm to 700 nm. This can further enhance the peel strength between the conductive layer and the polymer support layer while enabling the composite current collector to have relatively good tab welding reliability.

In any embodiment, the inorganic particles include one or more of boehmite, silicon carbide, silicon oxide, aluminum oxide, calcium carbonate, titanium oxide, and graphene. These inorganic particles can synergistically interact with polyimide to effectively enhance the strength of the composite current collector, and these inorganic particles do not react with the electrolytic solution.

In any embodiment, the binder includes one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide. These binders can provide strong bonding between the polymer support layer and the conductive layer, resulting in a relatively high peel strength between the conductive layer and the polymer support layer.

In any embodiment, the composite current collector further includes a passivation layer disposed between the adhesive layer and the conductive layer. This can provide passivation protection at an interface between the conductive layer and the adhesive layer, reducing micro-corrosion of the conductive layer by the electrolytic solution.

In any embodiment, a material of the passivation layer includes one or more of chromate, dichromate, organic phosphonate, $Al_2O_3$, $SiO_2$, and $Si_3N_4$.

In any embodiment, the chromate includes one or more of sodium chromate, potassium chromate, magnesium chromate, and silver chromate; the dichromate includes one or more of sodium dichromate, potassium dichromate, magnesium dichromate, and silver dichromate; and the organic phosphonate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid). These passivation materials can provide effective passivation protection for the conductive layer, effectively mitigating micro-corrosion of the conductive layer by the electrolytic solution.

In any embodiment, a thickness of the passivation layer is 1 nm to 500 nm; optionally, 10 nm to 200 nm. This can effectively mitigate micro-corrosion of the conductive layer by the electrolytic solution.

In any embodiment, a material of the polymer support layer includes one or more of polyamide, polyimide, polyethylene terephthalate, polybutylene terephthalate, polyethylene naphthalate, polycarbonate, polyethylene, polypropylene, propylene-ethylene copolymer, acrylonitrile-butadienestyrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers. Using these materials as the polymer support layer of the composite current collector, compared to conventional metal foil current collectors such as copper or aluminum foil, can effectively improve the safety and energy density of the battery while reducing the cost of the current collector.

In any embodiment, a material of the conductive layer includes one or more of aluminum, copper, nickel, titanium, silver, aluminum-zirconium alloy, graphite, acetylene black, graphene, and carbon nanotubes.

In any embodiment, a surface roughness of the conductive layer is Ra, and $0.1\ \mu m < Ra < 2\ \mu m$. This can ensure

relatively good adhesion between the active material layer and the composite current collector while enabling the electrode sheet to have a relatively low resistance.

A second aspect of this application further provides an electrode sheet, including an active material layer and the composite current collector according to the first aspect of this application, where the active material layer is disposed on a surface of the conductive layer facing away from the adhesive layer. As the composite current collector in the electrode sheet has a relatively high tensile modulus, the tab region is less prone to wrinkling or shrinking when the active material layer is formed, and the electrode sheet exhibits relatively good tab welding reliability.

A third aspect of this application further provides a secondary battery, including the composite current collector according to the first aspect of this application or the electrode sheet according to the second aspect of this application.

A fourth aspect of this application further provides an electrical apparatus, including the secondary battery according to the third aspect of this application.

Details of one or more embodiments of this application are set forth in the accompanying drawings and description below. Other features, objectives, and advantages of this application will become apparent from the description, accompanying drawings, and claims.

## BRIEF DESCRIPTION OF DRAWINGS

To better describe and illustrate the embodiments or examples provided by this application, reference may be made to one or more of the accompanying drawings. The additional details or examples used to describe the accompanying drawings should not be considered as limiting the scope of the disclosed application, the presently described embodiments or examples, or the presently understood best mode of these applications. In the accompanying drawings, the same reference signs denote the same components. In the accompanying drawings:

FIG. 1 is a schematic diagram of a composite current collector according to an embodiment of this application;
FIG. 2 is a schematic diagram of a composite current collector according to another embodiment of this application;
FIG. 3 is a schematic diagram of an electrode sheet according to an embodiment of this application;
FIG. 4 is a schematic diagram of an electrode sheet according to another embodiment of this application;
FIG. 5 is a schematic diagram of a battery cell according to an embodiment of this application;
FIG. 6 is an exploded view of the battery cell according to the embodiment of this application shown in FIG. 5; and
FIG. 7 is a schematic diagram of an electrical apparatus using a secondary battery as a power source according to an embodiment of this application.

Description of reference signs:
5: battery cell; 51: shell; 52: electrode assembly; 53: cover plate; 6: electrical apparatus; 10: composite current collector; 11: polymer support layer; 12: adhesive layer; 13: conductive layer; 121: first adhesive sub-layer; 122: second adhesive sub-layer; 14: passivation layer; 20: electrode sheet; and 21: active material layer.

## DESCRIPTION OF EMBODIMENTS

Hereinafter, embodiments of the composite current collector, electrode sheet, secondary battery, and electrical apparatus of this application are described in detail with appropriate reference to the accompanying drawings. However, unnecessary detailed descriptions may be omitted. For example, detailed descriptions of well-known matters or repetitive descriptions of substantially identical structures may be omitted. This is to avoid unnecessary verbosity in the following description and to facilitate understanding by those skilled in the art. Furthermore, the accompanying drawings and the following description are provided to enable those skilled in the art to fully understand this application and are not intended to limit the subject matter recited in the claims.

The "ranges" disclosed in this application are defined in the form of lower and upper limits, where a given range is defined by selecting a lower limit and an upper limit, and the selected lower and upper limits define the boundaries of a particular range. Ranges defined in this manner may include or exclude the endpoints, and any endpoint may be independently included or excluded, with any combination possible. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of any combination of real numbers between a and b, where both a and b are real numbers. For example, the numerical range "0 to 5" means that all real numbers between "0 to 5" have been listed herein, and "0 to 5" is merely an abbreviated representation of these numerical combinations. Additionally, when a parameter is expressed as an integer $\geq 2$, it is equivalent to listing that the parameter is, for example, the integer 2, 3, 4, 5, 6, 7, 8, 9, 10, 11, 12, and so forth. For example, when a parameter is expressed as an integer selected from "2 to 10," it is equivalent to listing the integers 2, 3, 4, 5, 6, 7, 8, 9, and 10.

In this application, references to "multiple," "a plurality," and the like, unless otherwise specified, mean a quantity greater than or equal to 2. For example, "one or more" means one or more than one.

Unless otherwise specified, all embodiments and optional embodiments of this application can be combined with each other to form new technical solutions.

Reference to "embodiment" herein means that a particular feature, structure, or characteristic described in connection with the embodiment may be included in at least one embodiment or implementation of this application. The appearances of this phrase in various places in the specification do not necessarily refer to the same embodiment, nor are they independent or alternative embodiments mutually exclusive of other embodiments. Those skilled in the art explicitly and implicitly understand that the embodiments described herein can be combined with other embodiments. References to "implementation" herein have a similar understanding.

Those skilled in the art can understand that in the methods of various embodiments or implementations, the order in which steps are described does not imply a strict execution sequence that imposes any limitation on the implementation process. The specific execution sequence of the various steps should be determined based on their functions and possible inherent logics. Unless otherwise specified, all steps in this application can be performed sequentially or randomly, preferably sequentially. For example, if a method includes steps (a) and (b), it means the method may include steps (a) and (b) performed sequentially, or steps (b) and (a) performed sequentially. For example, if it is mentioned that the method may further include step (c), it means step (c) may be added to the method in any order, for example, the method may include steps (a), (b), and (c), or steps (a), (c), and (b), or steps (c), (a), and (b), and so forth.

In this application, technical features or solutions described with terms such as "containing," "including," or "comprising," unless otherwise specified, do not exclude additional members beyond those listed and can be regarded as providing both closed features or solutions consisting of the listed members and open features or solutions including additional members beyond those listed. For example, if A includes a1, a2, and a3, unless otherwise specified, it may include other members or may not include additional members, and can be regarded as providing both the feature or solution where "A consists of a1, a2, and a3" and the feature or solution where "A includes a1, a2, and a3, as well as other members." In this application, unless otherwise specified, A (for example, B) means that B is a non-limiting example of A, and it can be understood that A is not limited to B.

In this application, "optionally," "optional," or "optional" means that something may or may not be present, that is, it refers to either of the two parallel options of "present" or "absent." If multiple "optional" instances appear in a technical solution, unless otherwise specified and there is no contradiction or mutual constraint, each "optional" instance is independent.

The weight mentioned in the description of the embodiments of this application may be a weight unit commonly known in the chemical field, such as $\mu g$, mg, g, or kg.

Currently, due to significant advancements in secondary batteries, higher requirements have been placed on the energy density and safety performance of secondary batteries. Compared to conventional current collectors such as copper foil or aluminum foil, composite current collectors are more conducive to increasing the energy density and safety performance of batteries. However, current composite current collectors suffer from issues such as relatively low elongation at break and relatively low tensile modulus. After the active material layer is applied, composite current collectors are prone to wrinkling or shrinking, which affects subsequent manufacturing processes and battery performance. To address this, this application improves the structure of the composite current collector to achieve relatively high elongation at break and tensile modulus, reducing the tendency for wrinkling or shrinking, thereby facilitating subsequent manufacturing processes and enhancing battery performance.

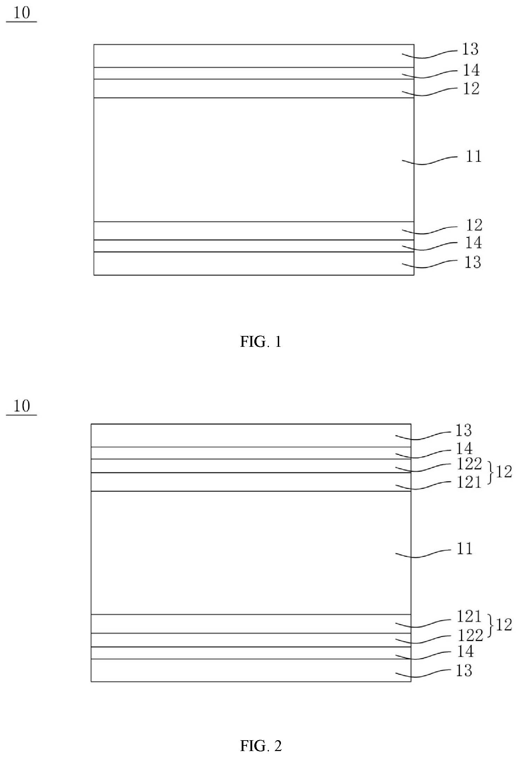

Referring to FIG. 1 and FIG. 2, in some embodiments, a first aspect of this application provides a composite current collector 10, where the composite current collector 10 includes a polymer support layer 11, an adhesive layer 12, and a conductive layer 13. The adhesive layer 12 is disposed on at least one surface of the polymer support layer 11, and the adhesive layer 12 includes polyimide, inorganic particles, and a binder. The conductive layer 13 is disposed on a surface of the adhesive layer 12 facing away from the polymer support layer 11.

For conventional composite current collectors 10, the conductive layer 13 is typically formed on the polymer support layer 11 via evaporation or magnetron sputtering. However, the formation of the conductive layer 13 causes significant thermal damage to the polymer support layer 11, leading to deformation of the film surface of the composite current collector 10 and reducing the elongation at break of the composite current collector 10. To address this, the conductive layer 13 can be formed on the polymer support layer 11 by applying an adhesive. However, composite current collectors 10 formed by applying an adhesive have a relatively low tensile modulus, and when an active material layer is formed on such composite current collectors 10, the tab region of the composite current collectors 10 is prone to wrinkling or shrinking due to drying stress, affecting subsequent manufacturing processes and increasing the direct current resistance (DCR) of the battery.

The composite current collector 10 of this application bonds the conductive layer 13 to the polymer support layer 11 through the adhesive layer 12, where the adhesive layer 12 includes polyimide, inorganic particles, and a binder.

Through the synergistic effect of polyimide and inorganic particles in the adhesive layer 12, the tensile modulus of the composite current collector 10 can be effectively improved, and wrinkling or shrinking at the tab region of the composite current collector 10 is mitigated. Furthermore, compared to conventional composite current collectors 10 that the conductive layer 13 is formed via evaporation or magnetron sputtering, the conductive layer 13 of the composite current collector 10 of this application can be bonded to the polymer support layer 11 through the adhesive layer 12, avoiding significant thermal damage to the polymer support layer 11, thereby enabling the composite current collector 10 to have a relatively high elongation at break.

It can be understood that the adhesive layer 12 may be disposed on only one surface of the polymer support layer 11, with the conductive layer 13 correspondingly disposed on that surface of the polymer support layer 11; alternatively, the adhesive layer 12 may be disposed on both opposing surfaces of the polymer support layer 11, with the conductive layer 13 correspondingly disposed on both surfaces of the polymer support layer 11.

In some embodiments, a mass fraction of the polyimide in the adhesive layer 12 is 30% to 70%, a mass fraction of the inorganic particles is 5% to 10%, and a mass fraction of the binder is 20% to 60%. When the mass fractions of polyimide, inorganic particles, and binder in the adhesive layer 12 are within the above ranges, the tensile modulus of the composite current collector can be effectively improved.

In some embodiments, a mass fraction of the polyimide in the adhesive layer 12 is 30% to 55%, a mass fraction of the inorganic particles is 5% to 10%, and a mass fraction of the binder is 35% to 60%. Controlling the mass fraction of polyimide in the adhesive layer 12 within 30% to 55%, the mass fraction of inorganic particles within 5% to 10%, and the mass fraction of the binder within 35% to 60% can further enhance the tensile modulus of the composite current collector 10, further mitigate wrinkling or shrinking at the tab region of the composite current collector 10, and also enable a relatively high peel strength between the conductive layer 13 and the polymer support layer 11.

It can be understood that the mass fraction of polyimide in the adhesive layer 12 may include, but is not limited to, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, or 55%; the mass fraction of inorganic particles in the adhesive layer 12 may include, but is not limited to, 5%, 6%, 7%, 8%, 9%, or 10%; and the mass fraction of the binder in the adhesive layer 12 may include, but is not limited to, 35%, 38%, 40%, 42%, 44%, 45%, 46%, 48%, 50%, 52%, 54%, 55%, 56%, 58%, or 60%.

In some embodiments, a thickness d1 of the adhesive layer 12 is 600 nm to 2000 nm; optionally, a thickness d1 of the adhesive layer 12 is 800 nm to 1500 nm. Controlling the thickness d1 of the adhesive layer 12 within the above range can better improve the tensile modulus of the composite current collector 10 and better mitigate wrinkling or shrinking at the tab region. It can also prevent the peel strength between the conductive layer 13 and the polymer support layer 11 from being too low due to an excessively thin adhesive layer 12, which could lead to relatively low welding tensile force and thus an increase in DCR of the battery cell, or prevent the risk of welding failure due to an excessively thick adhesive layer 12, which could result in virtual welding and thus an increase in DCR of the battery cell. It can be understood that the thickness d1 of the adhesive layer 12 may include, but is not limited to, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, or 2000 nm.

Referring to FIG. 2, in some embodiments, the adhesive layer 12 includes a first adhesive sub-layer 121 and a second adhesive sub-layer 122. The first adhesive sub-layer 121 is disposed on at least one surface of the polymer support layer 11, and the first adhesive sub-layer 121 includes polyimide, inorganic particles, and a binder. The second adhesive sub-layer 122 is disposed on a surface of the first adhesive sub-layer 121 facing away from the polymer support layer 11, where the conductive layer 13 is disposed on a surface of the second adhesive sub-layer 122 facing away from the first adhesive sub-layer 121, and the second adhesive sub-layer includes a binder. In other words, in this embodiment, the adhesive layer 12 includes a two-layer structure, where the first adhesive sub-layer 121, close to the polymer support layer 11, includes polyimide, inorganic particles, and a binder, and the second adhesive sub-layer 122, far away from the polymer support layer 11, may be a pure binder layer. This can further enhance the peel strength between the conductive layer 13 and the polymer support layer 11 and further improve the overall tensile modulus of the composite current collector 10, thereby further mitigating wrinkling or shrinking at the tab region.

In some embodiments, a mass fraction of the polyimide in the first adhesive sub-layer 121 is 60% to 70%, a mass fraction of the inorganic particles is 5% to 10%, and a mass fraction of the binder is 20% to 30%. Controlling the mass fraction of polyimide in the first adhesive sub-layer 121 within 60% to 70%, the mass fraction of inorganic particles within 5% to 10%, and the mass fraction of the binder within 20% to 30% can effectively improve the tensile modulus of the composite current collector 10, effectively mitigate wrinkling or shrinking at the tab region, and also improve the peel strength between the conductive layer 13 and the polymer support layer 11.

It can be understood that the mass fraction of polyimide in the first adhesive sub-layer 121 may include, but is not limited to, 60%, 61%, 62%, 63%, 64%, 65%, 66%, 67%, 68%, 69%, or 70%; the mass fraction of inorganic particles may include, but is not limited to, 5%, 6%, 7%, 8%, 9%, or 10%; and the mass fraction of the binder may include, but is not limited to, 20%, 21%, 22%, 23%, 24%, 25%, 26%, 27%, 28%, 29%, or 30%.

In some embodiments, a thickness d2 of the first adhesive sub-layer 121 is 500 nm to 1500 nm; optionally, a thickness d2 of the first adhesive sub-layer 121 is 600 nm to 1200 nm. Controlling the thickness of the first adhesive sub-layer 121 in the adhesive layer 12 within the above range can better enhance the tensile modulus of the composite current collector 10 and improve the tab welding reliability of the composite current collector 10, keeping the DCR of the battery cell at a normal level. It can be understood that the thickness d2 of the first adhesive sub-layer 121 may include, but is not limited to, 500 nm, 550 nm, 600 nm, 650 nm, 700 nm, 750 nm, 800 nm, 850 nm, 900 nm, 950 nm, 1000 nm, 1050 nm, 1100 nm, 1150 nm, 1200 nm, 1250 nm, 1300 nm, 1350 nm, 1400 nm, 1450 nm, or 1500 nm.

In some embodiments, a thickness d3 of the second adhesive sub-layer 122 is 300 nm to 700 nm. The second adhesive sub-layer 122 may be a pure binder layer with no polyimide or inorganic particles added. This can further enhance the peel strength between the conductive layer 13 and the polymer support layer 11 while enabling the composite current collector 10 to have relatively good tab welding reliability. It can be understood that the thickness d3 of the second adhesive sub-layer 122 may include, but is not limited to, 300 nm, 350 nm, 400 nm, 450 nm, 500 nm, 550 nm, 600 nm, 650 nm, or 700 nm.

In some embodiments, the inorganic particles contained in the adhesive layer 12 may include one or more of boehmite, silicon carbide, silicon oxide, aluminum oxide, calcium carbonate, titanium oxide, and graphene. Adding these inorganic particles to the adhesive layer 12 can synergistically interact with polyimide to effectively enhance the strength of the composite current collector 10, and these inorganic particles do not react with the electrolytic solution. D50 particle size of the inorganic particles may be 1 nm to 100 nm.

In some embodiments, the binder in the adhesive layer 12 includes one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide. Optionally, the binder includes one or more of a composition containing multifunctional isocyanate and polyester polyol compounds and polyurethane. In some specific examples, the polyurethane includes one or more of thermoplastic polyurethane and reactive polyurethane. These binders can provide strong bonding between the polymer support layer 11 and the conductive layer 13, resulting in a relatively high peel strength between the conductive layer 13 and the polymer support layer 11.

In some embodiments, the composite current collector 10 further includes a passivation layer 14, where the passivation layer 14 is disposed between the adhesive layer 12 and the conductive layer 13. The conductive layer 13 and the polymer support layer 11 of the composite current collector 10 are bonded together through the adhesive layer 12 containing a binder. When the composite current collector 10 is used in a battery, the electrolytic solution may penetrate between the adhesive layer 12 and the conductive layer 13, causing micro-corrosion of the conductive layer 13. By disposing the passivation layer 14 between the adhesive layer 12 and the conductive layer 13, this application can provide passivation protection at an interface between the conductive layer 13 and the adhesive layer 12, reducing micro-corrosion of the conductive layer 13 by the electrolytic solution.

In some embodiments, a material of the passivation layer 14 includes one or more of chromate, dichromate, organic phosphonate, $Al_2O_3$, $SiO_2$, and $Si_3N_4$. The chromate includes one or more of sodium chromate, potassium chromate, magnesium chromate, silver chromate, and ammonium dichromate; the dichromate includes one or more of sodium dichromate, potassium dichromate, magnesium dichromate, and silver dichromate; and the organic phosphonate includes one or more of hydroxyethylidene diphosphonic acid (HEDP), diethylenetriamine penta(methylene phosphonic acid) (DETPMP), triethylenetetramine hexa(methylene phosphonic acid) (TETHMP), and ethylenediamine tetra(methylene phosphonic acid) (EDTMP). Using these materials to form the passivation layer 14 at an interface between the conductive layer 13 and the adhesive layer 12 can provide effective passivation protection for the conductive layer 13, effectively mitigating micro-corrosion of the conductive layer 13 by the electrolytic solution.

In some embodiments, a thickness of the passivation layer 14 is 1 nm to 500 nm; optionally, the thickness of the passivation layer 14 is 10 nm to 200 nm. Controlling the thickness of the passivation layer 14 within the above range can effectively mitigate micro-corrosion of the conductive layer 13 by the electrolytic solution. It can be understood that the thickness of the passivation layer 14 may include, but is not limited to, 1 nm, 5 nm, 10 nm, 20 nm, 30 nm, 50 nm, 80 nm, 100 nm, 120 nm, 140 nm, 150 nm, 160 nm, 180 nm, 200 nm, 220 nm, 240 nm, 250 nm, 260 nm, 280 nm, 300 nm, 320 nm, 340 nm, 350 nm, 360 nm, 380 nm, 400 nm, 420 nm, 440 nm, 450 nm, 460 nm, 480 nm, or 500 nm.

In some embodiments, a material of the polymer support layer 11 includes one or more of polyamide, polyimide, polyethylene terephthalate, polybutylene terephthalate, polyethylene naphthalate, polycarbonate, polyethylene, polypropylene, propylene-ethylene copolymer, acrylonitrile-butadienestyrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers. Using these materials as the polymer support layer 11 of the composite current collector 10, compared to conventional metal foil current collectors such as copper or aluminum foil, can effectively improve the safety and energy density of the battery while reducing the cost of the current collector.

In some embodiments, the material of the polymer support layer 11 may further include one or more of metal materials and inorganic insulating materials. The inorganic insulating materials may include one or more of aluminum oxide, silicon carbide, and silicon dioxide. Adding these inorganic insulating materials to the material of the polymer support layer 11 can further enhance the strength of the composite current collector 10.

In some embodiments, a thickness of the polymer support layer 11 is 2 $\mu$m to 40 $\mu$m; optionally, a thickness of the polymer support layer 11 is 3 $\mu$m to 8 $\mu$m. Controlling the thickness of the polymer support layer 11 within the above range can enable the battery using the composite current collector 10 to have relatively high energy density and good safety. It can be understood that the thickness of the polymer support layer 11 may include, but is not limited to, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, 31 $\mu$m, 32 $\mu$m, 33 $\mu$m, 34 $\mu$m, 35 $\mu$m, 36 $\mu$m, 37 $\mu$m, 38 $\mu$m, 39 $\mu$m, or 40 $\mu$m.

In some embodiments, a material of the conductive layer 13 includes one or more of aluminum, copper, nickel, titanium, silver, aluminum-zirconium alloy, graphite, acetylene black, graphene, and carbon nanotubes. It can be understood that, depending on the material type of the conductive layer 13, the composite current collector 10 may be a positive electrode current collector or a negative electrode current collector. For example, when the material of the conductive layer 13 is aluminum, the composite current collector 10 is a positive electrode current collector; and when the material of the conductive layer 13 is copper, the composite current collector 10 is a negative electrode current collector.

In some embodiments, a thickness of the conductive layer 13 is 800 nm to 2000 nm. Controlling the thickness of the conductive layer 13 within the above range can effectively collect current and enable the battery to have relatively good safety. It can be understood that the thickness of the conductive layer 13 may include, but is not limited to, 800 nm, 850 nm, 900 nm, 950 nm, 1000 nm, 1050 nm, 1100 nm, 1150 nm, 1200 nm, 1300 nm, 1400 nm, 1500 nm, 1600 nm, 1700 nm, 1800 nm, 1900 nm, or 2000 nm.

In some embodiments, a surface roughness of the conductive layer 13 is Ra, and 0.1 $\mu$m < Ra < 2 $\mu$m. The surface roughness of the conductive layer 13 of the composite current collector 10 affects the adhesion of the active material layer to the composite current collector 10 and the resistance of the electrode sheet. Controlling the surface roughness Ra of the conductive layer 13 within the range of 0.1 $\mu$m < Ra < 2 $\mu$m can ensure relatively good adhesion between the active material layer and the composite current collector while enabling the electrode sheet to have relatively low resistance. It can be understood that the surface roughness Ra of the conductive layer 13 may include, but is not limited to, 0.11 $\mu$m, 0.15 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, or 1.9 $\mu$m.

In some embodiments, the composite current collector 10 according to the first aspect of this application can be prepared by the following method:

    providing a polymer support layer 11 and a conductive layer 13;
    laminating the polymer support layer 11 and the conductive layer 13 using an adhesive slurry; and
    curing the adhesive slurry to form an adhesive layer 12 between the polymer support layer 11 and the conductive layer 13, where the adhesive slurry includes polyimide, inorganic particles, and a binder.

By bonding the conductive layer 13 to the polymer support layer 11 through the adhesive layer 12, where the adhesive layer 12 includes polyimide, inorganic particles, and a binder, compared to conventional composite current collectors 10 that the conductive layer 13 is formed via evaporation or magnetron sputtering, the composite current collector 10 prepared by the above method avoids significant thermal damage to the polymer support layer 11, enabling the composite current collector 10 to have a relatively high elongation at break. Additionally, through the synergistic effect of polyimide and inorganic particles in the adhesive layer 12, the tensile modulus of the prepared composite current collector 10 can be effectively improved, and wrinkling or shrinking at the tab region of the composite current collector 10 is mitigated.

In some embodiments, when the adhesive layer 12 has a single-layer structure, the adhesive slurry for forming the adhesive layer 12 can be prepared by the following method: polyimide liquid, inorganic particles, and a binder are mixed in a proportion into a mixing tank, where a mass fraction of polyimide is 30% to 55%, a mass fraction of inorganic particles is 5% to 10%, and a mass fraction of the binder is 35% to 60%; a certain amount of N-methylpyrrolidone (NMP) as a solvent is added, and the mixture is stirred until the viscosity is 2000 cps to 20000 cps to prepare the adhesive slurry.

In some embodiments, when the adhesive layer 12 has a single-layer structure, the polymer support layer 11 and the conductive layer 13 can be laminated by the following method: the above adhesive slurry is applied to a metal foil serving as the conductive layer 13 via gravure coating, the metal foil coated with the adhesive slurry is baked in an oven at 80°C to 110°C, and then the surface of the baked metal foil coated with the adhesive slurry is thermally laminated to the polymer support layer 11; after the laminated current collector is cured to ensure sufficient adhesion of the binder, the metal foil may be thinned by an etching process to achieve the desired thickness, as needed; alternatively, before lamination, a metal layer may be formed as the conductive layer 13 on a thick carrier by evaporation or electrolysis, peeled off from the thick carrier, and then laminated to the polymer support layer 11 by applying the adhesive slurry to form the composite current collector 10.

In some embodiments, when the adhesive layer 12 has a two-layer structure, it includes a first adhesive sub-layer 121 and a second adhesive sub-layer 122 arranged in a stacked manner. The first adhesive sub-layer 121 is disposed on a side close to the polymer support layer 11, and the second adhesive sub-layer 122 is disposed on a side far away from the polymer support layer 11. The first adhesive sub-layer 121 includes polyimide, inorganic particles, and a binder, while the second adhesive sub-layer 122 may include only a binder.

The adhesive slurry for forming the first adhesive sub-layer 121 can be prepared by the following method: polyimide liquid, inorganic particles, and a binder are mixed in a proportion into a mixing tank, where a mass fraction of polyimide is 60% to 70%, a mass fraction of inorganic particles is 5% to 10%, and a mass fraction of the binder is 20% to 30%; a certain amount of N-methylpyrrolidone (NMP) as a solvent is added, and the mixture is stirred until the viscosity is 500 cps to 10000 cps to obtain the adhesive slurry.

In some embodiments, when the adhesive layer 12 has a two-layer structure, the polymer support layer 11 and the conductive layer 13 can be laminated by the following method: the adhesive slurry for the first adhesive sub-layer 121 is applied to a metal foil serving as the conductive layer 13 via gravure coating, the metal foil coated with the adhesive slurry is baked in an oven at 80°C to 110°C, and then the surface of the baked metal foil coated with the adhesive slurry is thermally laminated to the polymer support layer 11; after the laminated current collector is cured to ensure sufficient adhesion of the binder, the metal foil may be thinned by an etching process to achieve the desired thickness, as needed; alternatively, before lamination, a metal layer may be formed as the conductive layer 13 on a thick carrier by evaporation or electrolysis, peeled off from the thick carrier, and then laminated to the polymer support layer 11 by applying the adhesive slurry to form the composite current collector 10.

In some embodiments, before the adhesive slurry is applied to the conductive layer 13 via gravure coating, the surface of the conductive layer 13 to be coated with the adhesive slurry may be subjected to surface passivation treatment to form a passivation layer 14. Specifically, the passivation layer 14 may be formed by compounding a passivation material onto the conductive layer 13 via gravure printing, evaporation, or magnetron sputtering, followed by applying the adhesive slurry via gravure coating onto the passivation layer 14.

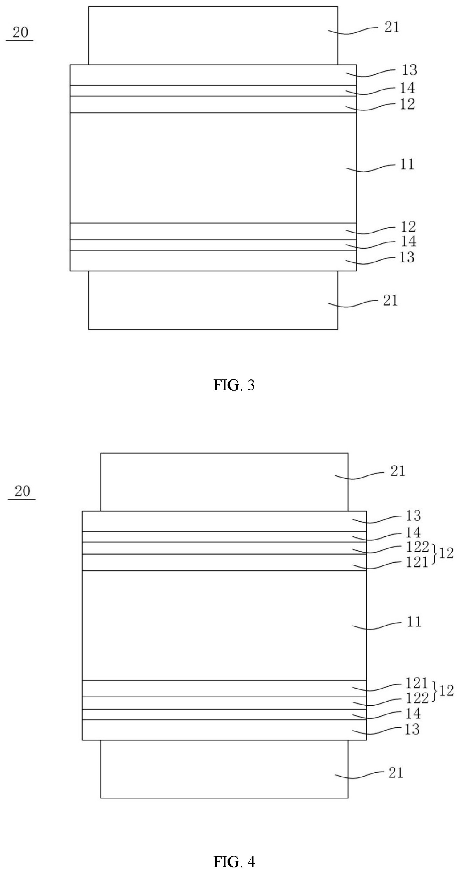

Referring to FIG. 3 and FIG. 4, in some embodiments, a second aspect of this application further provides an electrode sheet 20, where the electrode sheet 20 includes an active material layer 21 and the composite current collector 10 according to the first aspect of this application. The active material layer 21 is disposed on a surface of the conductive layer 13 of the composite current collector 10 facing away from the adhesive layer 12. In this way, the electrode sheet 20 uses the composite current collector 10 according to the first aspect of this application, as the composite current collector 10 has a high tensile modulus, a tab region is less prone to wrinkling or shrinking when the active material layer 21 is formed, and the electrode sheet 20 exhibits good tab welding reliability.

In some embodiments, depending on the material of the active material layer 21 and the material of the conductive layer 13, the electrode sheet 20 may be a positive electrode sheet or a negative electrode sheet. For example, when the active material in the active material layer 21 is a positive electrode active material and the conductive layer 13 is aluminum foil, the electrode sheet 20 is a positive electrode sheet; and when the active material in the active material layer 21 is a negative electrode active material and the conductive layer 13 is copper foil, the electrode sheet 20 is a negative electrode sheet.

It can be understood that, whether the electrode sheet 20 is a positive electrode sheet or a negative electrode sheet, the composite current collector 10 of the electrode sheet 20 may have a single-layer adhesive layer 12 structure as shown in FIG. 1, in which case the structure of the electrode sheet 20 is as shown in FIG. 3; alternatively, the composite current collector 10 may have a two-layer adhesive layer 12 structure as shown in FIG. 2, in which case the structure of the electrode sheet 20 is as shown in FIG. 4.

In some embodiments, a third aspect of this application further provides a secondary battery, where the secondary battery includes the composite current collector 10 according to the first aspect of this application or the electrode sheet 20 according to the second aspect of this application. It can be understood that the secondary battery may have only the positive electrode sheet using the electrode sheet 20 of the second aspect of this application, or may have only the negative electrode sheet using the electrode sheet 20 of the second aspect of this application, or may have both the positive and negative electrode sheets using the electrode sheet 20 of the second aspect of this application.

In some embodiments, a fourth aspect of this application further provides an electrical apparatus, where the electrical apparatus includes the secondary battery according to the third aspect of this application.

The secondary battery and electrical apparatus of this application are described below with appropriate reference to the accompanying drawings.

Unless otherwise specified, the components, material types, or contents mentioned for batteries apply to both lithium-ion secondary batteries and sodium-ion secondary batteries.

In one embodiment of this application, a secondary battery is provided.

Typically, a secondary battery includes a positive electrode sheet, a negative electrode sheet, an electrolyte, and a separator. During battery charging and discharging, active ions intercalate and deintercalate back and forth between the positive electrode sheet and the negative electrode sheet. The electrolyte conducts ions between the positive electrode sheet and the negative electrode sheet. The separator is disposed between the positive electrode sheet and the negative electrode sheet, primarily to prevent short-circuiting between the positive and negative electrodes while allowing ions to pass through.

**Positive electrode sheet**

The positive electrode sheet includes a positive electrode current collector and a positive electrode active material layer disposed on at least one surface of the positive electrode current collector.

As a non-limiting example, the positive electrode current collector has two opposing surfaces in its thickness direction, and the positive electrode active material layer is disposed on either or both of the two opposing surfaces of the positive electrode current collector.

In some embodiments, the positive electrode current collector may be the composite current collector according to the first aspect of this application.

In some embodiments, the positive electrode active material may include positive electrode active materials known in the art for batteries.

As a non-limiting example, the positive electrode active material for a lithium-ion secondary battery may include one or more of the following materials: lithium-containing phosphates with an olivine structure, lithium transition metal oxides, and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, and their modified compounds. Non-limiting examples of lithium-containing phosphates with an olivine structure may include, but are not limited to, one or more of lithium iron phosphate, lithium iron phosphate-carbon composites, lithium manganese phosphate, lithium manganese phosphate-carbon composites, lithium manganese iron phosphate, and lithium manganese iron phosphate-carbon composites. Non-limiting examples of lithium cobalt oxide may include $LiCoO_2$; non-limiting examples of lithium nickel oxide may include $LiNiO_2$; non-limiting examples of lithium manganese oxide may include $LiMnO_2$, $LiMn_2O_4$, and the like; non-limiting examples of lithium nickel cobalt manganese oxide may include $LiNi_{1/3}Co_{1/3}Mn_{1/3}O_2$ (also referred to as $NCM_{333}$ for short), $LiNi_{0.5}Co_{0.2}Mn_{0.3}O_2$ (also referred to as $NCM_{523}$ for short), $LiNi_{0.5}Co_{0.25}Mn_{0.25}O_2$ (also referred to as $NCM_{211}$ for short), $LiNi_{0.6}Co_{0.2}Mn_{0.2}O_2$ (also referred to as $NCM_{622}$ for short), $LiNi_{0.8}Co_{0.1}Mn_{0.1}O_2$ (also referred to as $NCM_{811}$ for short), and the like; and non-limiting examples of lithium nickel cobalt aluminum oxide may include $LiNi_{0.85}Co_{0.1}Al_{0.05}O_2$.

It can be understood that during battery charging and discharging, lithium (Li) intercalation and consumption occur, and the Li content in the positive electrode sheet varies depending on the discharge state of the battery. In this application, unless otherwise specified, the Li content in the listed positive electrode materials refers to the initial state of the material. When the positive electrode material is applied to the positive electrode sheet in a battery system, the Li content in the positive electrode material contained in the electrode sheet usually changes after charge-discharge cycles. The Li content may be measured by molar content, but is not limited thereto. Regarding "the Li content refers to the initial state of the material", the initial state of the material refers to the state before being incorporated into the positive electrode slurry. It can be understood that new materials obtained by appropriate modification of the listed positive electrode materials are also within the scope of positive electrode materials, where the appropriate modification refers to acceptable modification methods for positive electrode materials, with non-limiting examples including enveloping modification.

In the positive electrode materials listed in this application, the oxygen (O) content is only a theoretical value, and lattice oxygen release may cause variations in the molar content of oxygen, resulting in fluctuations in the actual O content. The O content may be measured by molar content, but is not limited thereto.

As a non-limiting example, the positive electrode active material for a sodium-ion secondary battery may include one or more of the following materials: sodium transition metal oxides, polyanionic compounds, and Prussian blue compounds. However, this application is not limited to these materials, and other conventional materials that can be used as positive electrode active materials for sodium-ion batteries may also be used.

As an optional technical solution of this application, in sodium transition metal oxides, the transition metal may be one or more of Mn, Fe, Ni, Co, Cr, Cu, Ti, Zn, V, Zr, and Ce. Sodium transition metal oxides may include, for example, $Na_xMO_2$, where M is one or more of Ti, V, Mn, Co, Ni, Fe, Cr, and Cu, and $0 < x \leq 1$.

As an optional technical solution of this application, polyanionic compounds may be a class of compounds containing sodium ions, transition metal ions, and tetrahedral $(YO_4)^{n-}$ anionic units. The transition metal may be one or more of Mn, Fe, Ni, Co, Cr, Cu, Ti, Zn, V, Zr, and Ce; Y may be one or more of P, S, and Si; and n represents the valence state of $(YO_4)^{n-}$.

Polyanionic compounds may also be a class of compounds containing sodium ions, transition metal ions, tetrahedral $(YO_4)^{n-}$ anionic units, and halogen anions. The transition metal may be one or more of Mn, Fe, Ni, Co, Cr, Cu, Ti, Zn, V, Zr, and Ce; Y may be one or more of P, S, and Si; n represents the valence state of $(YO_4)^{n-}$; and the halogen may be one or more of F, Cl, and Br.

Polyanionic compounds may also be a class of compounds containing sodium ions, tetrahedral $(YO_4)^{n-}$ anionic units, polyhedral units $(ZO_y)^{m+}$, and optional halogen anions. Y may be one or more of P, S, and Si; n represents the valence state of $(YO_4)^{n-}$; Z represents a transition metal, which may be one or more of Mn, Fe, Ni, Co, Cr, Cu, Ti, Zn, V, Zr, and Ce; m represents the valence state of $(ZO_y)^{m+}$; and the halogen may be one or more of F, Cl, and Br.

Polyanionic compounds may include, for example, one or more of $NaFePO_4$, $Na_3V_2(PO_4)_3$ (sodium vanadium phosphate, abbreviated as NVP), $Na_4Fe_3(PO_4)_2(P_2O_7)$, $NaM'PO_4F$ (where M' is one or more of V, Fe, Mn, and Ni), and $Na_3(VO_y)_2(PO_4)_2F_{3-2y}$ $(0 \leq y \leq 1)$.

Prussian blue compounds may be a class of compounds containing sodium ions, transition metal ions, and cyanide ions (CN). The transition metal may be one or more of Mn, Fe, Ni, Co, Cr, Cu, Ti, Zn, V, Zr, and Ce. Prussian blue compounds may include, for example, $Na_aMe_bMe'_c(CN)_6$, where Me and Me' are each independently one or more of Ni, Cu, Fe, Mn, Co, and Zn, $0 < a \leq 2$, $0 < b < 1$, and $0 < c < 1$.

A weight percentage of the positive electrode active material in the positive electrode active material layer is 80wt% to 100wt%, based on a total weight of the positive electrode active material layer.

In some embodiments, the positive electrode active material layer also optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. A weight percentage of the binder in the positive electrode active material layer is 0wt% to 20wt%, based on the total weight of the positive electrode active material layer.

In some embodiments, the positive electrode active material layer also optionally includes a conductive agent. As a non-limiting example, the conductive agent may include one or more of superconducting carbon, acetylene black, carbon black, Ketjen black, carbon dots, carbon nanotubes, graphene, and carbon nanofibers. A weight percentage of the conductive agent in the positive electrode active material layer is 0wt% to 20wt%, based on the total weight of the positive electrode active material layer.

In some embodiments, the positive electrode sheet can be prepared by the following method: dispersing components for preparing the positive electrode sheet, such as a positive electrode active material, a conductive agent, a binder, and any other components, in a solvent (for example, N-methylpyrrolidone) to prepare a positive electrode slurry, where a solid content of the positive electrode slurry is 40wt% to 80wt%, and a viscosity at room temperature is adjusted to 5000 mPa·s to 25000 mPa·s; applying the positive electrode slurry on a surface of a positive electrode current collector, drying, and cold-pressing with a cold rolling machine to form a positive electrode sheet; where a coating areal density of the positive electrode powder is 150 mg/m$^2$ to 350 mg/m$^2$, and a compacted density of the positive electrode sheet is 3.0 g/cm$^3$ to 3.6 g/cm$^3$, optionally 3.3 g/cm$^3$ to 3.5 g/cm$^3$.

The compacted density is calculated using the formula:

compacted density = coating areal density / (thickness of the electrode sheet after pressing - thickness of the current collector).

A mass M of the positive electrode active material in the positive electrode film per unit area can be weighed using a standard balance.

A thickness T of the positive electrode film can be measured using a micrometer, for example, a Mitutoyo 293-100 micrometer with a precision of 0.1 μm. It should be noted that the thickness of the positive electrode film in this application refers to a thickness of the positive electrode film in the positive electrode sheet after cold pressing and used for assembling the battery.

**Negative electrode sheet**

The negative electrode sheet includes a negative electrode current collector and a negative electrode active material layer disposed on at least one surface of the negative electrode current collector, where the negative electrode active material layer includes a negative electrode active material.

As a non-limiting example, the negative electrode current collector has two opposing surfaces in its thickness direction, and the negative electrode active material layer is disposed on either or both of the two opposing surfaces of the negative electrode current collector.

In some embodiments, the negative electrode current collector may be the composite current collector according to the first aspect of this application.

In some embodiments, the negative electrode active material may include negative electrode active materials known in the art for batteries.

As a non-limiting example, the negative electrode active material for a lithium-ion secondary battery may include one or more of the following materials: artificial graphite, natural graphite, soft carbon, hard carbon, silicon-based materials, tin-based materials, and lithium titanate. Silicon-based materials may include one or more of elemental silicon, silicon-oxygen compounds, silicon-carbon composites, silicon-nitrogen composites, and silicon alloys. Tin-based materials may include one or more of elemental tin, tin-oxygen compounds, and tin alloys. However, this application is not limited to these materials, and other conventional materials that can be used as negative electrode active materials for batteries may also be used. These negative electrode active materials may be used alone or in combination of two or more.

As a non-limiting example, the negative electrode active material for a sodium-ion secondary battery is typically a hard carbon material, two-dimensional metal carbide, or nitride. Preferably, the negative electrode active material for a sodium-ion secondary battery is a hard carbon material.

In some embodiments, the negative electrode active material layer also optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer also optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer also optionally includes other additives, such as thickeners (for example, sodium carboxymethyl cellulose (CMC-Na)).

In some embodiments, the negative electrode sheet can be prepared by the following method: dispersing components for preparing the negative electrode sheet, such as a negative electrode active material, a conductive agent, a binder, and any other components, in a solvent (a non-limiting example of the solvent is deionized water) to prepare a negative electrode slurry; applying the negative electrode slurry on at least one surface of the negative electrode current collector, and performing processes such as drying and cold pressing to obtain a negative electrode sheet. The surface of the negative electrode current collector coated with the negative electrode slurry may be a single surface or both surfaces of the negative electrode current collector. A solid content of the negative electrode slurry may be 40wt% to 60wt%. A viscosity of the negative electrode slurry at room temperature may be adjusted to 2000 mPa·s to 10000 mPa·s. During the application of the negative electrode slurry, a coating areal density (excluding the solvent) may be 75 g/m$^2$ to 220 g/m$^2$. A compacted density of the negative electrode sheet may be 1.0 g/cm$^3$ to 1.8 g/cm$^3$.

**Electrolyte**

The electrolyte conducts ions between the positive electrode sheet and the negative electrode sheet. This application does not impose specific limitations on the type of electrolyte, which can be selected based on requirements. For example, the electrolyte may be liquid, gel, or all-solid-state.

In some embodiments, the electrolyte is an electrolytic solution. The electrolytic solution includes an electrolyte salt and a solvent.

In some embodiments, the electrolyte salt for a lithium-ion secondary battery may include one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO$_2$F$_2$), lithium difluoro bis(oxalato)phosphate (LiDFOP), and lithium tetrafluoro(oxalato)phosphate (LiTFOP).

In some embodiments, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution also optionally includes additives. For example, the additives may include negative electrode film-forming additives, positive electrode film-forming additives, and additives that improve certain battery performances, such as additives that improve overcharge performance, high-temperature performance, or low-temperature performance of the battery.

In some embodiments, the additives in the electrolytic solution may include, but are not limited to, one or more of fluoroethylene carbonate (FEC), difluoroethylene carbonate (DFEC), and trifluoropropylene carbonate (TFPC).

**Separator**

In some embodiments, the secondary battery further includes a separator. This application does not impose specific limitations on the type of separator, and any well-known porous structure separator with good chemical and mechanical stability may be used.

In some embodiments, a material of the separator may include one or more of glass fiber, nonwoven fabric, polyethylene, polypropylene, and polyvinylidene fluoride. The separator may be a single-layer film or a multilayer composite film, with no particular limitation. When the separator is a multilayer composite film, the materials of various layers may be the same or different, with no particular limitation.

In some embodiments, a thickness of the separator is 6 $\mu$m to 40 $\mu$m, optionally 12 $\mu$m to 20 $\mu$m.

In some embodiments, the positive electrode sheet, the negative electrode sheet, and the separator may be formed into an electrode assembly through a winding process or a lamination process.

In some embodiments, the secondary battery may include an outer casing. The outer casing may be used to encapsulate the electrode assembly and the electrolyte.

In some embodiments, the outer casing of the secondary battery may be a hard shell, such as a hard plastic shell, aluminum shell, or steel shell. The outer casing of the secondary battery may also be a soft pack, such as a pouch-type soft pack. A material of the soft pack may be plastic, with non-limiting examples including one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of converting chemical energy into electrical energy, further typically including at least a positive electrode sheet, a negative electrode sheet, and an electrolyte. During battery charging and discharging, active ions intercalate and deintercalate back and forth between the positive electrode sheet and the negative electrode sheet. The electrolyte conducts active ions between the positive electrode sheet and the negative electrode sheet.

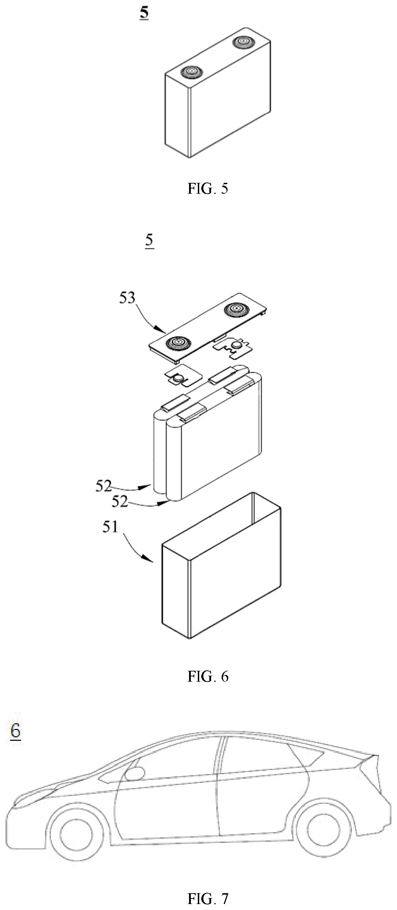

This application does not impose specific limitations on the shape of the battery cell, which may be cylindrical, square, or any other shape. For example, FIG. 5 shows a battery cell 5 with a square structure as an example.

In some embodiments, referring to FIG. 6, the outer casing may include a shell 51 and a cover plate 53. The shell 51 may include a bottom plate and side plates connected to the bottom plate, with the bottom plate and side plates enclosing an accommodating cavity. The shell 51 has an opening communicating with the accommodating cavity, and the cover plate 53 can cover the opening to seal the accommodating cavity. The positive electrode sheet, the negative electrode sheet, and the separator may be formed into an electrode assembly 52 through a winding process or a lamination process. The electrode assembly 52 is encapsulated in the accommodating cavity. The electrolytic solution infiltrates the electrode assembly 52. The number of electrode assemblies 52 included in the battery cell 5 may be one or may be multiple, and those skilled in the art may select the number based on specific requirements.

In some embodiments, the battery cell 5 may be assembled into a battery module, and the number of battery cells 5 included in the battery module may be one or may be multiple, with the specific number selected by those skilled in the art based on the application and capacity of the battery module.

In the battery module, multiple battery cells 5 may be arranged sequentially along a length direction of the battery module. Alternatively, they may be arranged in any other manner. Further, the multiple battery cells 5 may be fixed using fasteners.

Optionally, the battery module may further include a housing with an accommodating space, and the multiple battery cells 5 are accommodated in the accommodating space.

In some embodiments, the above battery module may be assembled into a battery pack, and the number of battery modules included in the battery pack may be one or may be multiple, with the specific number selected by those skilled in the art based on the application and capacity of the battery pack.

The battery pack may include a battery box and multiple battery modules disposed in the battery box. The battery box includes an upper box body and a lower box body, with the upper box body covering the lower box body to form a closed space for accommodating the battery modules. The multiple battery modules may be arranged in the battery box in any manner.

Additionally, this application further provides an electrical apparatus, where the electrical apparatus includes at least one of the secondary battery, battery module, or battery pack provided in this application. The secondary battery, the battery module, or the battery pack may be used as a power source for the electrical apparatus or as an energy storage unit for the electrical apparatus. The electrical apparatus may include, but is not limited to, mobile devices (for example, mobile phones, laptops), electric vehicles (for example, battery electric vehicles, hybrid electric vehicles, plug-in hybrid electric vehicles, electric bicycles, electric scooters, electric golf carts, electric trucks), electric trains, ships, satellites, and energy storage systems.

For the electrical apparatus, the secondary battery, the battery module, or the battery pack may be selected based on its usage requirements.

FIG. 7 shows an electrical apparatus 6 as an example. The electrical apparatus is a battery electric vehicle, hybrid electric vehicle, or plug-in hybrid electric vehicle. To meet the high power and high energy density requirements of the electrical apparatus for secondary batteries, a battery pack or battery module may be used.

As another example, the apparatus may be a mobile phone, tablet, laptop, or the like. Such devices typically require lightweight and thin designs and may use a battery cell as the power source.

The following are some embodiments.

To make the technical problems solved by this application, the technical solutions, and the beneficial effects clearer, this application is further described in detail below with reference to embodiments and drawings. It is apparent that the described embodiments are only some of the embodiments of this application, not all of them. The description of at least one exemplary embodiment below is merely illustrative and is not intended to limit this application or its applications. Based on the embodiments in this application, all other embodiments obtained by those of ordinary skill in the art without creative effort fall within the scope of protection of this application.

For embodiments where specific techniques or conditions are not specified, they are carried out according to techniques or conditions described in the literature in the field or according to product specifications. Reagents or instruments used without specifying the manufacturer are conventional products commercially available.

**I. Examples**

**Example 1:**

(1) Preparation of positive electrode sheet

(1.1) Preparation of positive electrode adhesive slurry

Polyimide liquid, boehmite powder, and PU682 polyurethane adhesive were mixed into a mixing tank; where a mass fraction of polyimide was 43%, a mass fraction of boehmite was 7%, and a mass fraction of PU682 polyurethane adhesive was 50%; N-methylpyrrolidone (NMP) as a solvent was added, and the mixture was stirred at a speed of 2000 rpm for 1 hour to prepare a positive electrode adhesive slurry.

(1.2) Preparation of positive electrode composite current collector

Aluminum foil was selected as the material for the conductive layer, a passivation solution of potassium dichromate was evenly applied on a surface of an aluminum foil via gravure printing to form a passivation layer with a thickness of 100 nm; the above positive electrode adhesive slurry was applied via gravure coating on the passivated surface of the aluminum foil; the coated aluminum foil was baked in an oven and thermally laminated with a polymer support layer to complete single-sided lamination. The same method was used to composite the aluminum foil on the other side of the polymer support layer. After the metal aluminum foil is composited, a curing process was performed to ensure the binder achieved full bonding; then the aluminum foil was subjected to etching treatment to obtain a conductive layer with a thickness of 1000 nm, thereby forming a composite current collector. The adhesive slurry in the composite current collector formed an adhesive layer after thermal lamination and curing, with a thickness of 1000 nm; the thickness of the polymer support layer was 6 $\mu$m; and the surface roughness Ra of the conductive layer was 0.6 $\mu$m.

(1.3) Preparation of positive electrode active material layer

A positive electrode active material NCM811, a conductive agent carbon black, and a binder styrene-butadiene rubber (SBR) latex were mixed at a mass ratio of 97:1.2:1.8 in the solvent N-methylpyrrolidone to prepare a uniform positive electrode slurry. The positive electrode slurry was applied on the conductive layers on both sides of the positive electrode composite current collector, followed by drying, cold pressing, slitting, and cutting processes to obtain a positive electrode sheet. A compacted density of the positive electrode was 3.4 g/cm$^3$.

(2) Preparation of negative electrode sheet

A negative electrode active material graphite, a conductive agent carbon black, and a binder carboxymethyl cellulose (CMC) were mixed at a mass ratio of 98:1:1 in an appropriate amount of deionized water solvent to prepare a uniform negative electrode slurry. The negative electrode slurry was applied on both sides of a copper foil negative electrode current collector, followed by drying, cold pressing, slitting, and cutting processes to obtain a negative electrode sheet. A compacted density of the negative electrode was 1.6 g/cm$^3$.

(3) Preparation of electrolytic solution

Ethylene carbonate (EC) and ethyl methyl carbonate (EMC) were mixed at a volume ratio of 3:7 to prepare an organic solvent, and fully dried $LiPF_6$ was dissolved in the organic solvent to prepare an electrolytic solution with a concentration of 1 mol/L.

(4) Separator

A polypropylene/polyethylene/polypropylene (PP/PE/PP) composite separator was used as the separator.

(5) Preparation of battery cell

The positive electrode sheet, the separator, and the negative electrode sheet were winded together to form a bare cell, with the separator positioned between the positive electrode sheet and the negative electrode sheet for isolation; roll welding and transfer welding were performed using double-sided metal edging to form tabs; the cell with welded tabs was placed into a battery shell, the electrolytic solution was injected, followed by sealing, formation, and other processes to obtain a lithium-ion secondary battery.

**Example 2:**

This example was substantially the same as Example 1, except that: in step (1.1), in the adhesive layer, a mass fraction of polyimide was 30%, a mass fraction of boehmite was 10%, and a mass fraction of polyurethane adhesive was 60%.

**Example 3:**

This example was substantially the same as Example 1, except that: in step (1.1), in the adhesive layer, a mass fraction of polyimide was 35%, a mass fraction of boehmite was 10%, and a mass fraction of polyurethane adhesive was 55%.

**Example 4:**

This example was substantially the same as Example 1, except that: in step (1.1), in the adhesive layer, a mass fraction of polyimide was 40%, a mass fraction of boehmite was 10%, and a mass fraction of polyurethane adhesive was 50%.

**Example 5:**

This example was substantially the same as Example 1, except that: in step (1.1), in the adhesive layer, a mass fraction of polyimide was 50%, a mass fraction of boehmite was 10%, and a mass fraction of polyurethane adhesive was 40%.

**Example 6:**

This example was substantially the same as Example 1, except that: in step (1.1), in the adhesive layer, a mass fraction of polyimide was 55%, a mass fraction of boehmite was 10%, and a mass fraction of polyurethane adhesive was 35%.

**Example 7:**

This example was substantially the same as Example 1, except that: in step (1.1), in the adhesive layer, a mass fraction of polyimide was 25%, a mass fraction of boehmite was 10%, and a mass fraction of polyurethane adhesive was 65%.

**Example 8:**

This example was substantially the same as Example 1, except that: in step (1.1), in the adhesive layer, a mass fraction of polyimide was 60%, a mass fraction of boehmite was 10%, and a mass fraction of polyurethane adhesive was 30%.

**Example 9:**

This example was substantially the same as Example 1, except that: in step (1.1), in the adhesive layer, a mass fraction of polyimide was 50%, a mass fraction of boehmite was 5%, and a mass fraction of polyurethane adhesive was 45%.

**Example 10:**

This example was substantially the same as Example 1, except that: in step (1.1), in the adhesive layer, a mass fraction of polyimide was 50%, a mass fraction of boehmite was 6%, and a mass fraction of polyurethane adhesive was 44%.

**Example 11:**

This example was substantially the same as Example 1, except that: in step (1.1), in the adhesive layer, a mass fraction of polyimide was 50%, a mass fraction of boehmite was 7%, and a mass fraction of polyurethane adhesive was 43%.

**Example 12:**

This example was substantially the same as Example 1, except that: in step (1.1), in the adhesive layer, a mass fraction of polyimide was 50%, a mass fraction of boehmite was 8%, and a mass fraction of polyurethane adhesive was 42%.

**Example 13:**

This example was substantially the same as Example 1, except that: in step (1.1), in the adhesive layer, a mass fraction of polyimide was 50%, a mass fraction of boehmite was 9%, and a mass fraction of polyurethane adhesive was 41%.

**Example 14:**

This example was substantially the same as Example 1, except that: in step (1.1), in the adhesive layer, a mass fraction of polyimide was 50%, a mass fraction of boehmite was 4%, and a mass fraction of polyurethane adhesive was 46%.

**Example 15:**

This example was substantially the same as Example 1, except that: in step (1.1), in the adhesive layer, a mass fraction of polyimide was 50%, a mass fraction of boehmite was 11%, and a mass fraction of polyurethane adhesive was 39%.

**Example 16:**

This example was substantially the same as Example 1, except that: in step (1.2), a thickness of the adhesive layer was 600 nm.

**Example 17:**

This example was substantially the same as Example 1, except that: in step (1.2), a thickness of the adhesive layer was 800 nm.

**Example 18:**

This example was substantially the same as Example 1, except that: in step (1.2), a thickness of the adhesive layer was 1500 nm.

**Example 19:**

This example was substantially the same as Example 1, except that: in step (1.2), a thickness of the adhesive layer was 2000 nm.

**Example 20:**

This example was substantially the same as Example 1, except that: in step (1.2), a thickness of the adhesive layer was 500 nm.

**Example 21:**

This example was substantially the same as Example 1, except that: in step (1.2), a thickness of the adhesive layer was 2100 nm.

**Example 22:**

This example was substantially the same as Example 1, except that: in step (1.2), the inorganic particles were silicon carbide.

**Example 23:**

This example was substantially the same as Example 1, except that: in step (1.2), the material of the passivation layer was hydroxyethylidene diphosphonic acid; and accordingly, the passivation layer formed was a phosphate passivation layer.

**Example 24:**

This example was substantially the same as Example 1, except that: in step (1.2), a thickness of the passivation layer was 200 nm.

**Example 25:**

This example was substantially the same as Example 1, except that: in step (1.2), a surface roughness Ra of the conductive layer was 1.5 μm.

**Example 26:**

(1) Preparation of positive electrode sheet

(1.1) Preparation of positive electrode first adhesive sub-layer slurry

Polyimide liquid, boehmite powder, and PU682 polyurethane adhesive were mixed into a mixing tank; where a mass fraction of polyimide was 65%, a mass fraction of boehmite was 7%, and a mass fraction of PU682 polyurethane adhesive was 28%; N-methylpyrrolidone as a solvent was added, and the mixture was stirred at a speed of 2000 rpm for 1 hour to prepare a positive electrode first adhesive sub-layer slurry.

(1.2) Preparation of positive electrode composite current collector

Aluminum foil was selected as the material for the conductive layer, a passivation solution of potassium dichromate was evenly applied on a surface of aluminum foil via gravure printing to form a passivation layer with a thickness of 100 nm; the above positive electrode first adhesive sub-layer slurry was applied via gravure coating on a surface of the polymer support layer, dried in an oven, and wind up for standby; a PU682 polyurethane binder layer was applied via gravure coating on the passivated surface of the aluminum foil; the coated aluminum foil was baked in an oven, and the surface of the aluminum foil coated with the polyurethane binder layer was thermally laminated to the surface of the polymer support layer coated with the positive electrode first adhesive sub-layer slurry to complete single-sided lamination. The same method was used to composite aluminum foil on the other side of the polymer support layer. After the aluminum foil composited cured, a curing process was performed to ensure the binder achieved full bonding; then the aluminum foil was thinned by etching treatment to obtain a conductive layer with a thickness of 1000 nm, thereby obtaining the composite current collector. The positive electrode first adhesive sub-layer slurry and the polyurethane layer in the composite current collector formed a positive electrode first adhesive sub-layer and a positive electrode second adhesive sub-layer, respectively, after thermal lamination and curing. A thickness of the positive electrode first adhesive sub-layer was 800 nm, a thickness of the positive electrode second adhesive sub-layer was 600 nm, a thickness of the polymer support layer was 6 μm; and a surface roughness Ra of the conductive layer was 0.6 μm.

(1.3) Preparation of positive electrode active material layer

A positive electrode active material NCM811, a conductive agent carbon black, and a binder styrene-butadiene rubber (SBR) latex were mixed at a mass ratio of 97:1.2:1.8 in the solvent N-methylpyrrolidone to prepare a uniform positive electrode slurry. The positive electrode slurry was applied on the conductive layers on both sides of the positive electrode composite current collector, followed by drying, cold pressing, slitting, and cutting processes to obtain a positive electrode sheet. A compacted density of the positive electrode was 3.4 g/cm$^3$.

The preparation steps for the negative electrode sheet, electrolytic solution, separator, and battery cell are the same as in Example 1.

**Example 27:**

This example was substantially the same as Example 26, except that: in the positive electrode first adhesive sub-layer, a mass fraction of polyimide was 60%, a mass fraction of boehmite was 10%, and a mass fraction of polyurethane adhesive was 30%.

**Example 28:**

This example was substantially the same as Example 26, except that: in the positive electrode first adhesive sub-layer, a mass fraction of polyimide was 63%, a mass fraction of boehmite was 10%, and a mass fraction of polyurethane adhesive was 27%.

**Example 29:**

This example was substantially the same as Example 26, except that: in the positive electrode first adhesive sub-layer, a mass fraction of polyimide was 68%, a mass fraction of boehmite was 10%, and a mass fraction of polyurethane adhesive was 22%.

**Example 30:**

This example was substantially the same as Example 26, except that: in the positive electrode first adhesive sub-layer, a mass fraction of polyimide was 70%, a mass fraction of boehmite was 10%, and a mass fraction of polyurethane adhesive was 20%.

**Example 31:**

This example was substantially the same as Example 26, except that: in the positive electrode first adhesive sub-layer, a mass fraction of polyimide was 55%, a mass fraction of boehmite was 10%, and a mass fraction of polyurethane adhesive was 35%.

**Example 32:**

This example was substantially the same as Example 26, except that: in the positive electrode first adhesive sub-layer, a mass fraction of polyimide was 75%, a mass fraction of boehmite was 10%, and a mass fraction of polyurethane adhesive was 15%.

**Example 33:**

This example was substantially the same as Example 26, except that: in the positive electrode first adhesive sub-layer, a mass fraction of polyimide was 65%, a mass fraction of boehmite was 5%, and a mass fraction of polyurethane adhesive was 30%.

**Example 34:**

This example was substantially the same as Example 26, except that: in the positive electrode first adhesive sub-layer, a mass fraction of polyimide was 65%, a mass fraction of boehmite was 6%, and a mass fraction of polyurethane adhesive was 29%.

**Example 35:**

This example was substantially the same as Example 26, except that: in the positive electrode first adhesive sub-layer, a mass fraction of polyimide was 65%, a mass fraction of boehmite was 7%, and a mass fraction of polyurethane adhesive was 28%.

**Example 36:**

This example was substantially the same as Example 26, except that: in the positive electrode first adhesive sub-layer, a mass fraction of polyimide was 65%, a mass fraction of boehmite was 8%, and a mass fraction of polyurethane adhesive was 27%.

**Example 37:**

This example was substantially the same as Example 26, except that: in the positive electrode first adhesive sub-layer, a mass fraction of polyimide was 65%, a mass fraction of boehmite was 9%, and a mass fraction of polyurethane adhesive was 26%.

**Example 38:**

This example was substantially the same as Example 26, except that: in the positive electrode first adhesive sub-layer, a mass fraction of polyimide was 65%, a mass fraction of boehmite was 4%, and a mass fraction of polyurethane adhesive was 31%.

**Example 39:**

This example was substantially the same as Example 26, except that: in the positive electrode first adhesive sub-layer, a mass fraction of polyimide was 65%, a mass fraction of boehmite was 11%, and a mass fraction of polyurethane adhesive was 24%.

**Example 40:**

This example was substantially the same as Example 26, except that: a thickness of the positive electrode first adhesive sub-layer was 500 nm.

**Example 41:**

This example was substantially the same as Example 26, except that: a thickness of the positive electrode first adhesive sub-layer was 600 nm.

**Example 42:**

This example was substantially the same as Example 26, except that: a thickness of the positive electrode first adhesive sub-layer was 1000 nm.

**Example 43:**

This example was substantially the same as Example 26, except that: a thickness of the positive electrode first adhesive sub-layer was 1200 nm.

**Example 44:**

This example was substantially the same as Example 26, except that: a thickness of the positive electrode first adhesive sub-layer was 1500 nm.

**Example 45:**

This example was substantially the same as Example 26, except that: a thickness of the positive electrode first adhesive sub-layer was 400 nm.

**Example 46:**

This example was substantially the same as Example 26, except that: a thickness of the positive electrode first adhesive sub-layer was 1600 nm.

**Example 47:**

This example was substantially the same as Example 26, except that: a thickness of the positive electrode second adhesive sub-layer was 300 nm.

**Example 48:**

This example was substantially the same as Example 26, except that: a thickness of the positive electrode second adhesive sub-layer was 700 nm.

**Example 49:**

(1) Preparation of positive electrode sheet

A positive electrode active material NCM811, a conductive agent carbon black, and a binder styrene-butadiene rubber (SBR) latex were mixed at a mass ratio of 97:1.2:1.8 in the solvent N-methylpyrrolidone to prepare a uniform positive electrode slurry. The positive electrode slurry was applied on both sides of an aluminum foil positive electrode current collector, followed by drying, cold pressing, slitting, and cutting processes to obtain a positive electrode sheet. A compacted density of the positive electrode was 3.4 g/cm$^3$.

(2) Preparation of negative electrode sheet

(2.1) Preparation of negative electrode adhesive slurry

Polyimide liquid, boehmite powder, and PU682 polyurethane adhesive were mixed into a mixing tank; where a mass fraction of polyimide was 43%, a mass fraction of boehmite was 7%, and a mass fraction of PU682 polyurethane adhesive was 50%; N-methylpyrrolidone as a solvent was added, and the mixture was stirred at a speed of 2000 rpm for 1 hour to prepare a negative electrode adhesive slurry.

(2.2) Preparation of negative electrode composite current collector

Copper foil was selected as the material for the conductive layer, a passivation solution of potassium dichromate was evenly applied on the surface of the copper foil via gravure printing to form a passivation layer with a thickness of 100 nm; the above negative electrode adhesive slurry was applied via gravure coating on the passivated surface of the copper foil; the coated copper foil was baked in an oven and thermally laminated with a polymer support layer to complete single-sided lamination. The same method was used to laminate copper foil on the other side of the polymer support layer. After the copper foil was cured, a curing process was performed to ensure the binder achieved full bonding; then the copper foil was thinned by etching treatment to obtain a conductive layer with a thickness of 1000 nm, thereby obtaining the composite current collector. The adhesive slurry in the composite current collector formed an adhesive layer after thermal lamination and curing, with a thickness of 1000 nm; the thickness of the polymer support layer was 6 $\mu$m; and the surface roughness Ra of the conductive layer was 0.6 $\mu$m.

(2.3) Preparation of negative electrode active material layer

A negative electrode active material graphite, a conductive agent carbon black, and a binder carboxymethyl cellulose (CMC) were mixed at a mass ratio of 98:1:1 in an appropriate amount of deionized water solvent to prepare a uniform negative electrode slurry. The negative electrode slurry was applied on the conductive layers on both sides of the negative electrode composite current collector, followed by drying, cold pressing, slitting, and cutting processes to obtain a negative electrode sheet. A compacted density of the negative electrode was 1.6 g/cm$^3$.

The preparation steps for the electrolytic solution, separator, and battery cell are the same as in Example 1.

**Example 50:**

This example was substantially the same as Example 49, except that: in step (2.1), in the adhesive layer, a mass fraction of polyimide was 30%, a mass fraction of boehmite was 10%, and a mass fraction of polyurethane adhesive was 60%.

**Example 51:**

This example was substantially the same as Example 49, except that: in step (2.1), in the adhesive layer, a mass fraction of polyimide was 55%, a mass fraction of boehmite was 5%, and a mass fraction of polyurethane adhesive was 40%.

**Example 52:**

This example was substantially the same as Example 49, except that: in step (2.2), a thickness of the adhesive layer was 600 nm.

**Example 53:**

This example was substantially the same as Example 49, except that: in step (2.2), a thickness of the adhesive layer was 2000 nm.

**Example 54:**

(1) Preparation of positive electrode sheet

A positive electrode active material NCM811, a conductive agent carbon black, and a binder styrene-butadiene rubber (SBR) latex were mixed at a mass ratio of 97:1.2:1.8 in the solvent N-methylpyrrolidone to prepare a uniform positive electrode slurry. The positive electrode slurry was applied on both sides of an aluminum foil positive electrode current collector, followed drying, cold pressing, slitting, and cutting processes to obtain a positive electrode sheet. A compacted density of the positive electrode was 3.4 g/cm$^3$.

(2) Preparation of negative electrode sheet

(2.1) Preparation of negative electrode first adhesive sub-layer slurry

Polyimide liquid, boehmite powder, and PU682 polyurethane adhesive were mixed into a mixing tank; where a mass fraction of polyimide was 65%, a mass fraction of boehmite was 7%, and a mass fraction of PU682 polyurethane adhesive was 28%; N-methylpyrrolidone as a solvent was added, and the mixture was stirred at a speed of 2000 rpm for 1 hour to prepare a negative electrode first adhesive sub-layer slurry.

(2.2) Preparation of negative electrode composite current collector

Copper foil was selected as the material for the conductive layer, chromium-containing passivation treatment was performed on the surface of the copper foil via gravure printing to form a passivation layer with a thickness of 100 nm; the above negative electrode first adhesive sub-layer slurry was applied via gravure coating on the surface of the polymer support layer, dried in an oven, and winded up for standby; a PU682 polyurethane binder layer was applied via gravure coating on the passivated surface of the copper foil; the coated copper foil was baked in an oven, and the surface of the copper foil coated with the polyurethane binder layer was thermally laminated to the surface of the polymer support layer coated with the negative electrode first adhesive sub-layer slurry to complete single-sided lamination. The same method was used to composite copper foil on the other side of the polymer support layer. After the copper foil was composited, a curing process was performed to ensure the binder achieved full bonding; then the copper foil was thinned by etching treatment to obtain a conductive layer with a thickness of 1000 nm, thereby obtaining a composite current collector. The negative electrode first adhesive sub-layer slurry and the polyurethane adhesive layer in the composite current collector formed a negative electrode first adhesive sub-layer and a negative electrode second adhesive sub-layer, respectively, after thermal lamination and curing. A thickness of the negative electrode first adhesive sub-layer was 800 nm, a thickness of the negative electrode second adhesive sub-layer was 600 nm, a thickness of the polymer support layer was 6 $\mu$m; and a surface roughness Ra of the conductive layer was 0.6 $\mu$m.

(2.3) Preparation of negative electrode active material layer

A negative electrode active material graphite, a conductive agent carbon black, and a binder carboxymethyl cellulose (CMC) were mixed at a mass ratio of 98:1:1 in an appropriate amount of deionized water solvent to prepare a uniform negative electrode slurry. The negative electrode slurry was applied on the conductive layers on both sides of the negative electrode composite current collector, followed by drying, cold pressing, slitting, and cutting processes to obtain a negative electrode sheet. A compacted density of the negative electrode was 1.6 g/cm$^3$.

The preparation steps for the electrolytic solution, separator, and battery cell are the same as in Example 49.

**Example 55:**

This example was substantially the same as Example 54, except that: in step (2.2), in the negative electrode first adhesive sub-layer, a mass fraction of polyimide was 60%, a mass fraction of boehmite was 10%, and a mass fraction of polyurethane adhesive was 30%.

**Example 56:**

This example was substantially the same as Example 54, except that: in step (2.2), in the negative electrode first adhesive sub-layer, a mass fraction of polyimide was 70%, a mass fraction of boehmite was 5%, and a mass fraction of polyurethane adhesive was 25%.

**Example 57:**

This example was substantially the same as Example 54, except that: in step (2.2), a thickness of the negative electrode first adhesive sub-layer was 500 nm.

**Example 58:**

This example was substantially the same as Example 54, except that: in step (2.2), a thickness of the negative electrode first adhesive sub-layer was 1500 nm.

II. Comparative Examples

**Comparative Example 1:**

This comparative example was substantially the same as Example 20, except that: in step (1.1), the positive electrode adhesive slurry contained no polyimide or inorganic particles.

**Comparative Example 2:**

This comparative example was substantially the same as Example 20, except that: in step (1.1), the positive electrode adhesive slurry contained no polyimide.

**Comparative Example 3:**

This comparative example was substantially the same as Example 20, except that: in step (1.1), the positive electrode adhesive slurry contained no inorganic particles.

**Comparative Example 4:**

This comparative example was substantially the same as Example 49, except that: in step (2.1), the negative electrode adhesive slurry contained no polyimide or inorganic particles.

**Comparative Example 5:**

This comparative example was substantially the same as Example 49, except that: in step (2.1), the negative electrode adhesive slurry contained no polyimide.

**Comparative Example 6:**

This comparative example was substantially the same as Example 49, except that: in step (2.1), the negative electrode adhesive slurry contained no inorganic particles.

III. Test methods

(1) Test for thickness of each layer in composite current collector

A cross-sectional sample of the composite current collector was prepared using liquid nitrogen quenching or argon ion etching. The secondary electron morphology of cross section of the sample was observed using a scanning electron microscope at magnifications of 1000 to 30,000 times, and the thicknesses of the polymer support layer, adhesive layer, first adhesive sub-layer, second adhesive sub-layer, passivation layer, and conductive layer were measured. The minimum resolution could reach the nanometer level.

(2) Test for content of polyimide, inorganic particles, and binder

The content of polyimide, inorganic particles, and binder in the adhesive layer could be measured using conventional methods in the art. For example, it could be measured by combining infrared testing with XRD.

(3) Test for roughness of conductive layer

A roughness tester was used to test the surface of the conductive layer of the composite current collector and find the Ra value.

$$Ra\ average = (sum\ of\ Ra\ values\ of\ 10\ test\ points)\ /\ 10.$$

(4) Test for elongation at break of composite current collector

MD (machine direction) elongation at break test: A standard sampler was used to cut the sample into 10 strips each with a width of 15 mm and a length of 15 cm along the MD direction; the sample was fixed in the clamps of a tensile testing machine, the speed was set to 50 mm/min, with a gauge length of 50 mm between the clamps, and a tensile test was performed to measure the elongation at break. MD elongation at break = (sum of elongation at break of 10 test samples) / 10; and unit was %.

TD (transverse direction) tensile modulus test: A standard sampler was used to cut the sample into 10 strips each with a width of 15 mm and a length of 15 cm along the TD direction; the sample was fixed in the clamps of a tensile testing machine, the speed was set to 50 mm/min, with a gauge length of 50 mm between the clamps, and a tensile test was performed to measure the elongation at break. TD elongation at break = (sum of elongation at break of 10 test samples) / 10; and unit was %.

(5) Test for tensile modulus of composite current collector

MD (machine direction) tensile modulus test: A standard sampler was used to cut the sample into 10 strips each with a width of 15 mm and a length of 15 cm along the MD direction; the sample was fixed in the clamps of a tensile testing machine, the speed was set to 50 mm/min, with a gauge length of 50 mm between the clamps, and a tensile test was performed to measure the strength corresponding to 1% elongation for modulus calculation. MD tensile modulus = (strength / 1%) / 1000; MD tensile modulus average = (sum of moduli of 10 test samples) / 10; and unit was GPa.

TD (transverse direction) tensile modulus test: A standard sampler was used to cut the sample into 10 strips each with a width of 15 mm and a length of 15 cm along the TD direction; the sample was fixed in the clamps of a tensile testing machine, the speed was set to 50 mm/min, with a gauge length of 50 mm between the clamps, and a tensile test was performed to measure the strength corresponding to 1% elongation for modulus calculation. TD tensile modulus = (strength / 1%) / 1000; TD tensile modulus average = (sum of moduli of 10 test samples) / 10; and unit was GPa.

(6) Test for peel strength of conductive layer

The sample was laminated with the non-corona-treated surface of an ethylene-acrylic acid copolymer (EAA) film, then the EAA film was covered with a 12 $\mu$m thick PET film, and it was laminated on a heat sealing machine at a temperature of 120°C and a pressure of 0.2 MPa. The laminated sample was cut into strips with a length of 100 mm and a width of 20 mm, and the non-laminated surface of the conductive layer was attached to a steel plate using 3M double-sided tape; the sample was clamped in the clamps of a tensile testing machine with a 50 mm spacing, a 180°C peel test was performed at a speed of 300 mm/min, the peel strength was read and converted to N/m units, 5 parallel samples were tested, and the average peel strength was taken: peel strength average = (sum of peel strengths of 5 test samples) / 5.

(7) Test for tab shrinkage rate

Before the active material layer was applied on the composite current collector, the tab width dimension was measured every 50 meters using a vernier caliper aligned with the tab region of the composite current collector; after application and drying of the active material layer on the composite current collector, the tab width dimension was measured every 50 meters again using a vernier caliper aligned with the tab region; the shrinkage rate was calculated by comparing the tab width dimension after application and drying of the active material layer with the original tab width dimension before application of the active material layer:

tab shrinkage rate = (original tab width - tab width after application) / original tab width) $\times$ 100%; and

$$\text{tab shrinkage rate average} = (\text{sum of tab shrinkage rates of 10 samples}) / 10;$$

tab shrinkage rate requirement $\leq$ 5%.
The tab shrinkage rate test data could be used to evaluate whether wrinkling or shrinking occurred in the tab region after application and drying of the active material layer and the extent of such wrinkling or shrinking.

(8) Test for shear force of electrode sheet

A shear force-specific adhesive tape was attached to a steel plate, with the tape having a width of 4 mm and a length of 5 mm, the electrode sheet was attached to the tape, and the bonding strength between the active material layer and the conductive layer was measured using a Gotech tensile testing machine (shear force magnitude $\geq$ 0.3 MPa):

$$\text{shear force average} = (\text{sum of shear force values of 10 samples}) / 10.$$

The shear force test data of the electrode sheet could be used to evaluate the bonding strength between the active material layer and the conductive layer of the electrode sheet.

(9) Test for tab welding tensile force

Through a conventional battery manufacturing process, the positive electrode sheet, separator, and negative electrode sheet were winded together to form a bare cell, and roll welding and transfer welding were performed using double-sided metal edging to form tabs; the welding tensile force of a single-layer tab was measured using a Gotech tensile testing machine. The welding region (tab, weld mark, and active material layer) of the electrode sheet was cut into samples with a width of 50 mm and a length of 60 mm, with the weld mark region located in the middle of the sample. A tensile test was performed on the sample at a speed of 5 mm/min, and the maximum force at weld fracture was read. 10 samples were tested, and one sample was taken every 1 meter. the mechanical bonding effect of the welding was evaluated through the average and standard deviation of the welding tensile force of the samples: welding tensile force average = (sum of welding tensile force values of 10 samples) / 10.

(10) Test for U-shaped resistance of electrode sheet after roll welding

The welded electrode sheet was cut into samples matching the size of the battery cell, and the resistance between the two tabs using an internal resistance meter was measured.

$$\text{U-shaped resistance average} = (\text{sum of U-shaped resistance values of 10 samples}) / 10.$$

The parameters of the electrode sheets in the secondary batteries of the above examples and comparative examples of this application are shown in Table 1 and Table 2, and the performance data of the electrode sheets are shown in Table 3 and Table 4. In Tables 1 to 4, "S" represents examples, and "D" represents comparative examples. For example, S1 represents Example 1, S2 represents Example 2, and so forth; similarly, D1 represents Comparative Example 1, D2 represents Comparative Example 2, and so forth. In the parameters "composition of adhesive layer" and "composition of first adhesive sub-layer" in Tables 1 and 2, the three values separated by commas represent the mass fractions of polyimide, inorganic particles, and binder, respectively, from left to right. For example, in Example 1, "43,7,50" indicates that the mass fractions of polyimide, inorganic particles, and binder in the adhesive layer are 43%, 7%, and 50%, respectively; other examples and comparative examples are similar. In Tables 1 and 2, "/" indicates not present, and in Tables 3 and 4, "/" indicates not tested.

Table 1

| Item | Positive electrode sheet | | | | | | | | |
|---|---|---|---|---|---|---|---|---|---|
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
| S1 | 1000 | 43, 7, 50 | / | / | / | 0.6 | 100 | Potassium dichromate | Boehmite |
| S2 | 1000 | 30, 10, 60 | / | / | / | 0.6 | 100 | Potassium dichromate | Boehmite |
| S3 | 1000 | 35, 10, 55 | / | / | / | 0.6 | 100 | Potassium dichromate | Boehmite |
| S4 | 1000 | 40, 10, 50 | / | / | / | 0.6 | 100 | Potassium dichromate | Boehmite |
| S5 | 1000 | 50, 10, 40 | / | / | / | 0.6 | 100 | Potassium dichromate | Boehmite |
| S6 | 1000 | 55, 10,35 | / | / | / | 0.6 | 100 | Potassium dichromate | Boehmite |
| S7 | 1000 | 25, 10, 65 | / | / | / | 0.6 | 100 | Potassium dichromate | Boehmite |
| S8 | 1000 | 60, 10, 30 | / | / | / | 0.6 | 100 | Potassium dichromate | Boehmite |
| S9 | 1000 | 50, 5, 45 | / | / | / | 0.6 | 100 | Potassium dichromate | Boehmite |
| S10 | 1000 | 50, 6, 44 | / | / | / | 0.6 | 100 | Potassium dichromate | Boehmite |
| S11 | 1000 | 50, 7, 43 | / | / | / | 0.6 | 100 | Potassium dichromate | Boehmite |
| S12 | 1000 | 50, 8, 42 | / | / | / | 0.6 | 100 | Potassium dichromate | Boehmite |

(continued)

| Ite m | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer ($\mu$m) | Thickness of passivation layer (nm) | Material of passivation layer | Type of inorganic particles |
|---|---|---|---|---|---|---|---|---|---|
| | | | | | Positive electrode sheet | | | | |
| S1 3 | 1000 | 50, 9, 41 | / | / | / | 0.6 | 100 | Potassium dichromate | Boehmi te |
| S1 4 | 1000 | 50, 4, 46 | / | / | / | 0.6 | 100 | Potassium dichromate | Boehmi te |
| S1 5 | 1000 | 50, 11, 39 | / | / | / | 0.6 | 100 | Potassium dichromate | Boehmi te |
| S1 6 | 600 | 43, 7, 50 | / | / | / | 0.6 | 100 | Potassium dichromate | Boehmi te |
| S1 7 | 800 | 43, 7, 50 | / | / | / | 0.6 | 100 | Potassium dichromate | Boehmi te |
| S1 8 | 1500 | 43, 7, 50 | / | / | / | 0.6 | 100 | Potassium dichromate | Boehmi te |
| S1 9 | 2000 | 43, 7, 50 | / | / | / | 0.6 | 100 | Potassium dichromate | Boehmi te |
| S2 0 | 500 | 43, 7, 50 | / | / | / | 0.6 | 100 | Potassium dichromate | Boehmi te |
| S2 1 | 2100 | 43, 7, 50 | / | / | / | 0.6 | 100 | Potassium dichromate | Boehmi te |
| S2 2 | 1000 | 43, 7, 50 | / | / | / | 0.6 | 100 | Potassium dichromate | Silicon carbide |
| S2 3 | 1000 | 43, 7, 50 | / | / | / | 0.6 | 100 | Hydroxyethylidene diphospho-nic acid | Boehmi te |
| S2 4 | 1000 | 43, 7, 50 | / | / | / | 0.6 | 200 | Potassium dichromate | Boehmi te |
| S2 5 | 1000 | 43, 7, 50 | / | / | / | 1.5 | 100 | Potassium dichromate | Boehmi te |
| S2 6 | 1400 | / | 800 | 65, 7, 28 | 600 | 0.6 | 100 | Potassium dichromate | Boehmi te |
| S2 7 | 1400 | / | 800 | 60, 10, 30 | 600 | 0.6 | 100 | Potassium dichromate | Boehmi te |
| S2 8 | 1400 | / | 800 | 63, 10, 27 | 600 | 0.6 | 100 | Potassium dichromate | Boehmi te |
| S2 9 | 1400 | / | 800 | 68, 10, 22 | 600 | 0.6 | 100 | Potassium dichromate | Boehmi te |
| S3 0 | 1400 | / | 800 | 70, 10, 20 | 600 | 0.6 | 100 | Potassium dichromate | Boehmi te |
| S3 1 | 1400 | / | 800 | 55, 10,35 | 600 | 0.6 | 100 | Potassium di-chromate | Boehmi te |

(continued)

| Item | Positive electrode sheet | | | | | | | | |
|---|---|---|---|---|---|---|---|---|---|
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
| S3 2 | 1400 | / | 800 | 75, 10, 15 | 600 | 0.6 | 100 | Potassium di-chromate | Boehmite |
| S3 3 | 1400 | / | 800 | 65, 5, 30 | 600 | 0.6 | 100 | Potassium di-chromate | Boehmite |
| S3 4 | 1400 | / | 800 | 65, 6, 29 | 600 | 0.6 | 100 | Potassium di-chromate | Boehmite |
| S3 5 | 1400 | / | 800 | 65, 7, 28 | 600 | 0.6 | 100 | Potassium di-chromate | Boehmite |
| S3 6 | 1400 | / | 800 | 65, 8, 27 | 600 | 0.6 | 100 | Potassium di-chromate | Boehmite |
| S3 7 | 1400 | / | 800 | 65, 9, 26 | 600 | 0.6 | 100 | Potassium di-chromate | Boehmite |
| S3 8 | 1400 | / | 800 | 65, 4, 31 | 600 | 0.6 | 100 | Potassium di-chromate | Boehmite |
| S3 9 | 1400 | / | 800 | 65, 11,24 | 600 | 0.6 | 100 | Potassium di-chromate | Boehmite |
| S4 0 | 1100 | / | 500 | 65, 7, 28 | 600 | 0.6 | 100 | Potassium di-chromate | Boehmite |
| S4 1 | 1200 | / | 600 | 65, 7, 28 | 600 | 0.6 | 100 | Potassium di-chromate | Boehmite |
| S4 2 | 1600 | / | 1000 | 65, 7, 28 | 600 | 0.6 | 100 | Potassium di-chromate | Boehmite |
| S4 3 | 1800 | / | 1200 | 65, 7, 28 | 600 | 0.6 | 100 | Potassium di-chromate | Boehmite |
| S4 4 | 2100 | / | 1500 | 65, 7, 28 | 600 | 0.6 | 100 | Potassium di-chromate | Boehmite |
| S4 5 | 1000 | / | 400 | 65, 7, 28 | 600 | 0.6 | 100 | Potassium di-chromate | Boehmite |
| S4 6 | 2200 | / | 1600 | 65, 7, 28 | 600 | 0.6 | 100 | Potassium di-chromate | Boehmite |
| S4 7 | 1100 | / | 800 | 65, 7, 28 | 300 | 0.6 | 100 | Potassium di-chromate | Boehmite |
| S4 8 | 1500 | / | 800 | 65, 7, 28 | 700 | 0.6 | 100 | Potassium di-chromate | Boehmite |
| S4 9 | / | / | / | / | / | / | / | / | / |
| S5 0 | / | / | / | / | / | / | / | / | / |
| S5 1 | / | / | / | / | / | / | / | / | / |
| S5 2 | / | / | / | / | / | / | / | / | / |
| S5 3 | / | / | / | / | / | / | / | / | / |

(continued)

| Item | Positive electrode sheet | | | | | | | | |
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
|---|---|---|---|---|---|---|---|---|---|
| S5 4 | / | / | / | / | / | / | / | / | / |
| S5 5 | / | / | / | / | / | / | / | / | / |
| S5 6 | / | / | / | / | / | / | / | / | / |
| S5 7 | / | / | / | / | / | / | / | / | / |
| S5 8 | / | / | / | / | / | / | / | / | / |
| D1 | 500 | 0, 0, 100 | / | / | / | 0.6 | 100 | Potassium di-chromate | Boehmite |
| D2 | 500 | 0, 7, 93 | / | / | / | 0.6 | 100 | Potassium di-chromate | Boehmite |
| D3 | 500 | 43, 0, 57 | / | / | / | 0.6 | 100 | Potassium di-chromate | Boehmite |
| D4 | / | / | / | / | / | / | / | / | / |
| D5 | / | / | / | / | / | / | / | / | / |
| D6 | / | / | / | / | / | / | / | / | / |

**Table 2**

| Item | Negative electrode sheet | | | | | | | | |
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
|---|---|---|---|---|---|---|---|---|---|
| S1 | / | / | / | / | / | / | / | / | / |
| S2 | / | / | / | / | / | / | / | / | / |
| S3 | / | / | / | / | / | / | / | / | / |
| S4 | / | / | / | / | / | / | / | / | / |
| S5 | / | / | / | / | / | / | / | / | / |
| S6 | / | / | / | / | / | / | / | / | / |
| S7 | / | / | / | / | / | / | / | / | / |
| S8 | / | / | / | / | / | / | / | / | / |
| S9 | / | / | / | / | / | / | / | / | / |
| S1 0 | / | / | / | / | / | / | / | / | / |
| S1 1 | / | / | / | / | / | / | / | / | / |
| S1 2 | / | / | / | / | / | / | / | / | / |
| S1 3 | / | / | / | / | / | / | / | / | / |

(continued)

| Item | Negative electrode sheet | | | | | | | | |
|---|---|---|---|---|---|---|---|---|---|
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
| S1 4 | / | / | / | / | / | / | / | / | / |
| S1 5 | / | / | / | / | / | / | / | / | / |
| S1 6 | / | / | / | / | / | / | / | / | / |
| S1 7 | / | / | / | / | / | / | / | / | / |
| S1 8 | / | / | / | / | / | / | / | / | / |
| S1 9 | / | / | / | / | / | / | / | / | / |
| S2 0 | / | / | / | / | / | / | / | / | / |
| S2 1 | / | / | / | / | / | / | / | / | / |
| S2 2 | / | / | / | / | / | / | / | / | / |
| S2 3 | / | / | / | / | / | / | / | / | / |
| S2 4 | / | / | / | / | / | / | / | / | / |
| S2 5 | / | / | / | / | / | / | / | / | / |
| S2 6 | / | / | / | / | / | / | / | / | / |
| S2 7 | / | / | / | / | / | / | / | / | / |
| S2 8 | / | / | / | / | / | / | / | / | / |
| S2 9 | / | / | / | / | / | / | / | / | / |
| S3 0 | / | / | / | / | / | / | / | / | / |
| S3 1 | / | / | / | / | / | / | / | / | / |
| S3 2 | / | / | / | / | / | / | / | / | / |
| S3 3 | / | / | / | / | / | / | / | / | / |
| S3 4 | / | / | / | / | / | / | / | / | / |
| S3 5 | / | / | / | / | / | / | / | / | / |
| S3 6 | / | / | / | / | / | / | / | / | / |
| S3 7 | / | / | / | / | / | / | / | / | / |
| S3 8 | / | / | / | / | / | / | / | / | / |
| S3 9 | / | / | / | / | / | / | / | / | / |
| S4 0 | / | / | / | / | / | / | / | / | / |
| S4 1 | / | / | / | / | / | / | / | / | / |
| S4 2 | / | / | / | / | / | / | / | / | / |
| S4 3 | / | / | / | / | / | / | / | / | / |
| S4 4 | / | / | / | / | / | / | / | / | / |
| S4 5 | / | / | / | / | / | / | / | / | / |
| S4 6 | / | / | / | / | / | / | / | / | / |
| S4 7 | / | / | / | / | / | / | / | / | / |

(continued)

| Ite m | Negative electrode sheet | | | | | | | | |
|---|---|---|---|---|---|---|---|---|---|
| | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
| S4 8 | / | / | / | / | / | / | / | / | / |
| S4 9 | 1000 | 43, 7, 50 | / | / | / | 0.6 | 100 | Potassium di-chromate | Boehmite |
| S5 0 | 1000 | 30, 10, 60 | / | / | / | 0.6 | 100 | Potassium di-chromate | Boehmite |
| S5 1 | 1000 | 55, 5, 40 | / | / | / | 0.6 | 100 | Potassium di-chromate | Boehmite |
| S5 2 | 600 | 43, 7, 50 | / | / | / | 0.6 | 100 | Potassium di-chromate | Boehmite |
| S5 3 | 2000 | 43, 7, 50 | / | / | / | 0.6 | 100 | Potassium di-chromate | Boehmite |
| S5 4 | 1400 | / | 800 | 65, 7, 28 | 600 | 0.6 | 100 | Potassium di-chromate | Boehmite |
| S5 5 | 1400 | / | 800 | 60, 10, 30 | 600 | 0.6 | 100 | Potassium di-chromate | Boehmite |
| S5 6 | 1400 | / | 800 | 70, 5, 25 | 600 | 0.6 | 100 | Potassium di-chromate | Boehmite |
| S5 7 | 1100 | / | 500 | 65, 7, 28 | 600 | 0.6 | 100 | Potassium di-chromate | Boehmite |
| S5 8 | 2100 | / | 1500 | 65, 7, 28 | 600 | 0.6 | 100 | Potassium di-chromate | Boehmite |
| D1 | / | / | / | / | / | / | / | / | / |
| D2 | / | / | / | / | / | / | / | / | / |

(continued)

| Ite m | Thickness of adhesive layer (nm) | Composition of adhesive layer (wt%) | Thickness of first adhesive sub-layer (nm) | Composition of first adhesive sub-layer (wt%) | Thickness of second adhesive sub-layer (nm) | Roughness of conductive layer (μm) | Thickness of passivation layer (nm) | Material of passivation layer | Type of inorganic particles |
|---|---|---|---|---|---|---|---|---|---|
| | | | | Negative electrode sheet | | | | | |
| D3 | / | / | / | / | / | / | / | / | / |
| D4 | 1000 | 0, 0, 100 | / | / | / | 0.6 | 100 | Potassium di-chromate | Boehmite |
| D5 | 1000 | 0, 7, 93 | / | / | / | 0.6 | 100 | Potassium di-chromate | Boehmite |
| D6 | 1000 | 43, 0, 57 | / | / | / | 0.6 | 100 | Potassium di-chromate | Boehmite |

**Table 3**

| Item | MD tensile modulus (GPa) | TD tensile modulus (GPa) | Tab shrinkage rate (%) | Tab welding tensile force (N) | U-shaped resistance (mΩ) | Elongation at break (%) |
|---|---|---|---|---|---|---|
| | | | Positive electrode sheet | | | |
| S1 | 9.5 | 10.3 | 0 | 48 | 92 | 88 |
| S2 | 6.1 | 6.2 | 5 | 47 | 84 | 89 |
| S3 | 7.6 | 7.3 | 4 | 46 | 85 | 86 |
| S4 | 8.5 | 8.7 | 2 | 45 | 83 | 88 |
| S5 | 9.8 | 10.2 | 0 | 47 | 85 | 85 |
| S6 | 11.3 | 11.6 | 0 | 44 | 86 | 70 |
| S7 | 5.4 | 5.6 | 30 | 18 | 165 | 98 |
| S8 | 11.7 | 11.8 | 0 | 12 | 188 | 56 |
| S9 | 8.2 | 8.6 | 2 | 45 | 88 | 92 |
| S10 | 8.8 | 8.9 | 2 | 41 | 87 | 90 |
| S11 | 9.1 | 9.2 | 1 | 44 | 87 | 86 |
| S12 | 9.3 | 9.4 | 0 | 46 | 86 | 86 |
| S13 | 9.6 | 10 | 0 | 44 | 86 | 87 |
| S14 | 5.6 | 5.7 | 20 | 21 | 154 | 99 |
| S15 | 11.6 | 11.8 | 0 | 18 | 169 | 55 |
| S16 | 6.2 | 6.3 | 5 | 29 | 105 | 85 |
| S17 | 8.3 | 9.6 | 2 | 45 | 90 | 91 |
| S18 | 8.5 | 10.1 | 2 | 44 | 93 | 92 |

(continued)

| Item | Positive electrode sheet | | | | | |
|------|------------------------------|------------------------------|---------------------|------------------------------------|-------------------------------|-------------------------|
| | MD tensile modulus (GPa) | TD tensile modulus (GPa) | Tab shrinkage rate (%) | Tab welding tensile force (N) | U-shaped resistance (mΩ) | Elongation at break (%) |
| S19 | 9 | 11 | 1 | 26 | 109 | 89 |
| S20 | 5.2 | 5.3 | 40 | 14 | 188 | 77 |
| S21 | 10.5 | 11.6 | 0 | 18 | 166 | 99 |
| S22 | 9.6 | 10.6 | 0 | 45 | 89 | 87 |
| S23 | 9.8 | 10.3 | 0 | 44 | 84 | 89 |
| S24 | 9.7 | 10.5 | 0 | 43 | 85 | 86 |
| S25 | 9.5 | 10.3 | 0 | 48 | 92 | 88 |
| S26 | 7.7 | 7.9 | 2 | 46 | 83 | 88 |
| S27 | 7.5 | 7.8 | 2 | 43 | 83 | 89 |
| S28 | 9 | 9.5 | 1 | 46 | 88 | 88 |
| S29 | 13.6 | 14 | 0 | 45 | 76 | 73 |
| S30 | 13.9 | 14.2 | 0 | 44 | 75 | 72 |
| S31 | 5.8 | 5.9 | 15 | 21 | 156 | 90 |
| S32 | 14.1 | 14.4 | 0 | 17 | 166 | 72 |
| S33 | 7.1 | 7.2 | 2 | 45 | 86 | 90 |
| S34 | 12.5 | 12.6 | 0 | 46 | 85 | 82 |
| S35 | 12.8 | 12.9 | 0 | 44 | 87 | 80 |
| S36 | 13.2 | 13.5 | 0 | 44 | 86 | 76 |
| S37 | 13.4 | 13.6 | 0 | 46 | 85 | 75 |
| S38 | 5.6 | 5.9 | 20 | 16 | 166 | 91 |
| S39 | 15.3 | 15.6 | 0 | 17 | 167 | 46 |
| S40 | 7.7 | 7.9 | 2 | 46 | 83 | 88 |
| S41 | 9.8 | 10.1 | 0 | 45 | 85 | 85 |
| S42 | 13.2 | 13.8 | 0 | 41 | 88 | 74 |
| S43 | 13.8 | 14.1 | 0 | 38 | 96 | 73 |
| S44 | 14.2 | 14.5 | 0 | 26 | 103 | 70 |
| S45 | 5.6 | 5.7 | 20 | 16 | 169 | 97 |
| S46 | 15.2 | 15.5 | 0 | 17 | 168 | 66 |
| S47 | 12.6 | 13.1 | 0 | 45 | 90 | 83 |
| S48 | 11.3 | 11.5 | 0 | 47 | 87 | 98 |
| S49 | / | / | / | / | / | / |
| S50 | / | / | / | / | / | / |
| S51 | / | / | / | / | / | / |
| S52 | / | / | / | / | / | / |
| S53 | / | / | / | / | / | / |
| S54 | / | / | / | / | / | / |
| S55 | / | / | / | / | / | / |

(continued)

| Item | Positive electrode sheet | | | | | |
|---|---|---|---|---|---|---|
| | MD tensile modulus (GPa) | TD tensile modulus (GPa) | Tab shrinkage rate (%) | Tab welding tensile force (N) | U-shaped resistance (mΩ) | Elongation at break (%) |
| S56 | / | / | / | / | / | / |
| S57 | / | / | / | / | / | / |
| S58 | / | / | / | / | / | / |
| D1 | 4.2 | 4.3 | 60 | 10 | 198 | 87 |
| D2 | 4.4 | 4.5 | 50 | 11 | 193 | 83 |
| D3 | 4.8 | 4.9 | 45 | 12 | 190 | 80 |
| D4 | / | / | / | / | / | / |
| D5 | / | / | / | / | / | / |
| D6 | / | / | / | / | / | / |

**Table 4**

| Item | Negative electrode sheet | | | | | |
|---|---|---|---|---|---|---|
| | MD tensile modulus (GPa) | TD tensile modulus (GPa) | Tab shrinkage rate (%) | Tab welding tensile force (N) | U-shaped resistance (mΩ) | Elongation at break (%) |
| S1 | / | / | / | / | / | / |
| S2 | / | / | / | / | / | / |
| S3 | / | / | / | / | / | / |
| S4 | / | / | / | / | / | / |
| S5 | / | / | / | / | / | / |
| S6 | / | / | / | / | / | / |
| S7 | / | / | / | / | / | / |
| S8 | / | / | / | / | / | / |
| S9 | / | / | / | / | / | / |
| S10 | / | / | / | / | / | / |
| S11 | / | / | / | / | / | / |
| S12 | / | / | / | / | / | / |
| S13 | / | / | / | / | / | / |
| S14 | / | / | / | / | / | / |
| S15 | / | / | / | / | / | / |
| S16 | / | / | / | / | / | / |
| S17 | / | / | / | / | / | / |
| S18 | / | / | / | / | / | / |
| S19 | / | / | / | / | / | / |
| S20 | / | / | / | / | / | / |
| S21 | / | / | / | / | / | / |
| S22 | / | / | / | / | / | / |
| S23 | / | / | / | / | / | / |

(continued)

| Item | Negative electrode sheet | | | | | |
|---|---|---|---|---|---|---|
| | MD tensile modulus (GPa) | TD tensile modulus (GPa) | Tab shrinkage rate (%) | Tab welding tensile force (N) | U-shaped resistance (mΩ) | Elongation at break (%) |
| S24 | / | / | / | / | / | / |
| S25 | / | / | / | / | / | / |
| S26 | / | / | / | / | / | / |
| S27 | / | / | / | / | / | / |
| S28 | / | / | / | / | / | / |
| S29 | / | / | / | / | / | / |
| S30 | / | / | / | / | / | / |
| S31 | / | / | / | / | / | / |
| S32 | / | / | / | / | / | / |
| S33 | / | / | / | / | / | / |
| S34 | / | / | / | / | / | / |
| S35 | / | / | / | / | / | / |
| S36 | / | / | / | / | / | / |
| S37 | / | / | / | / | / | / |
| S38 | / | / | / | / | / | / |
| S39 | / | / | / | / | / | / |
| S40 | / | / | / | / | / | / |
| S41 | / | / | / | / | / | / |
| S42 | / | / | / | / | / | / |
| S43 | / | / | / | / | / | / |
| S44 | / | / | / | / | / | / |
| S45 | / | / | / | / | / | / |
| S46 | / | / | / | / | / | / |
| S47 | / | / | / | / | / | / |
| S48 | / | / | / | / | / | / |
| S49 | 14.5 | 12.6 | 0 | 47 | 22 | 10 |
| S50 | 12.3 | 11.5 | 0 | 46 | 22 | 11 |
| S51 | 16.5 | 15.2 | 0 | 45 | 21 | 10 |
| S52 | 11.8 | 11.2 | 0 | 43 | 20 | 13 |
| S53 | 17.8 | 17.1 | 0 | 35 | 23 | 12 |
| S54 | 16.8 | 16.2 | 0 | 45 | 22 | 11 |
| S55 | 15.3 | 14.8 | 0 | 45 | 21 | 10 |
| S56 | 17.4 | 16.8 | 0 | 44 | 20 | 11 |
| S57 | 15.5 | 15.3 | 0 | 43 | 19 | 12 |
| S58 | 18.8 | 18.1 | 0 | 44 | 20 | 11 |
| D1 | / | / | / | / | / | / |
| D2 | / | / | / | / | / | / |

(continued)

| Item | Negative electrode sheet | | | | | |
|------|------------------------------|------------------------------|----------------------|----------------------------------|--------------------------------|-------------------------|
|      | MD tensile modulus (GPa) | TD tensile modulus (GPa) | Tab shrinkage rate (%) | Tab welding tensile force (N) | U-shaped resistance (mΩ) | Elongation at break (%) |
| D3   | /    | /    | /    | /    | /    | /    |
| D4   | 5.5  | 5.3  | 25   | 11   | 135  | 13   |
| D5   | 6.2  | 5.6  | 20   | 12   | 125  | 13   |
| D6   | 6.3  | 5.5  | 20   | 12   | 115  | 13   |

From the above Examples 1 to 58, it can be seen that the composite current collector of this application has a relatively high tensile modulus and elongation at break, and the electrode sheet using the composite current collector of this application has a relatively low tab shrinkage rate, relatively high tab welding tensile force, and relatively low U-shaped resistance.

By comparing Examples 1 to 7 and Example 8, it can be seen that controlling the percentage of polyimide in the adhesive layer within 30% to 55% and the percentage of the binder within 35% to 60% can, while enabling the composite current collector to have a relatively high tensile modulus, further enhance the welding tensile force of the electrode sheet, reduce the U-shaped resistance of the electrode sheet, and enable the electrode sheet to have a relatively high elongation at break.

By comparing Examples 9 to 15, it can be seen that controlling the percentage of inorganic particles in the adhesive layer within 5% to 10% can enable the composite current collector to have a relatively high tensile modulus and elongation at break, while enabling the electrode sheet to have a relatively low tab shrinkage rate, relatively high tab welding tensile force, and relatively low U-shaped resistance, achieving superior overall performance.

By comparing Examples 16 to 21, it can be seen that controlling the thickness of the adhesive layer within 600 nm to 2000 nm can enable the composite current collector to have a relatively high tensile modulus and elongation at break, while enabling the electrode sheet to have a relatively low tab shrinkage rate, relatively high tab welding tensile force, and relatively low U-shaped resistance, achieving excellent overall performance. Further, controlling the thickness of the adhesive layer within 800 nm to 1500 nm can further enhance overall performance.

By comparing Examples 26 to 32, it can be seen that when the adhesive layer adopts a two-layer structure, controlling the percentage of polyimide in the first adhesive sub-layer within 60% to 70% and the percentage of the binder within 20% to 30% can enable the composite current collector to have a relatively high tensile modulus and elongation at break, while enabling the electrode sheet to have a relatively low tab shrinkage rate, relatively high tab welding tensile force, and relatively low U-shaped resistance, achieving more excellent overall performance.

By comparing Examples 33 to 39, it can be seen that when the adhesive layer adopts a two-layer structure, controlling the percentage of inorganic particles in the first adhesive sub-layer within 5% to 10% can enable the composite current collector to have a relatively high tensile modulus and elongation at break, while enabling the electrode sheet to have a relatively low tab shrinkage rate, relatively high tab welding tensile force, and relatively low U-shaped resistance, achieving more excellent overall performance.

By comparing Examples 40 to 46, it can be seen that when the adhesive layer adopts a two-layer structure, controlling the thickness of the first adhesive sub-layer within 500 nm to 1500 nm can enable the composite current collector to have a relatively high tensile modulus and elongation at break, while enabling the electrode sheet to have a relatively low tab shrinkage rate, relatively high tab welding tensile force, and relatively low U-shaped resistance, achieving more excellent overall performance.

By comparing Comparative Examples 1 to 3 with Example 20, and Comparative Examples 4 to 6 with Example 49, it can be seen that when the adhesive layer does not include polyimide and/or inorganic particles, the tensile modulus of the composite current collector is significantly reduced, the tab shrinkage rate of the electrode sheet increases, the welding tensile force of the electrode sheet decreases, and the U-shaped resistance increases, resulting in a significant decline in overall performance.

The descriptions of the various embodiments above tend to emphasize the differences between the embodiments, and their similarities or identical aspects can be cross-referenced for brevity and are not repeated herein.

It should be noted that this application is not limited to the above embodiments. The above embodiments are merely examples, and embodiments within the scope of the technical solution of this application that have substantially the same structure and achieve the same effects as the technical idea are included within the technical scope of this application. Additionally, within the scope of not departing from the gist of this application, various modifications that can be conceived by those skilled in the art applied to the embodiments and other configurations constructed by combining some constituent elements of the embodiments are also included within the scope of this application.

**Claims**

1. A composite current collector, comprising:

   a polymer support layer;
   an adhesive layer disposed on at least one surface of the polymer support layer, and the adhesive layer comprises polyimide, inorganic particles, and a binder; and
   a conductive layer disposed on a surface of the adhesive layer facing away from the polymer support layer.

2. The composite current collector according to claim 1, wherein a mass fraction of the polyimide in the adhesive layer is 30% to 70%, a mass fraction of the inorganic particles is 5% to 10%, and a mass fraction of the binder is 20% to 60%.

3. The composite current collector according to claim 1 or 2, wherein a mass fraction of the polyimide in the adhesive layer is 30% to 55%, a mass fraction of the inorganic particles is 5% to 10%, and a mass fraction of the binder is 35% to 60%.

4. The composite current collector according to any one of claims 1 to 3, wherein a thickness of the adhesive layer is 600 nm to 2000 nm.

5. The composite current collector according to claim 4, wherein a thickness of the adhesive layer is 800 nm to 1500 nm.

6. The composite current collector according to claim 1, wherein the adhesive layer comprises:

   a first adhesive sub-layer disposed on at least one surface of the polymer support layer, and the first adhesive sub-layer comprises the polyimide, the inorganic particles, and the binder; and
   a second adhesive sub-layer disposed on a surface of the first adhesive sub-layer facing away from the polymer support layer, wherein the conductive layer is disposed on a surface of the second adhesive sub-layer facing away from the first adhesive sub-layer, and the second adhesive sub-layer comprises the binder.

7. The composite current collector according to claim 6, wherein a mass fraction of the polyimide in the first adhesive sub-layer is 60% to 70%, a mass fraction of the inorganic particles is 5% to 10%, and a mass fraction of the binder is 20% to 30%.

8. The composite current collector according to claim 6 or 7, wherein a thickness of the first adhesive sub-layer is 500 nm to 1500 nm.

9. The composite current collector according to claim 8, wherein a thickness of the first adhesive sub-layer is 600 nm to 1200 nm.

10. The composite current collector according to any one of claims 6 to 9, wherein a thickness of the second adhesive sub-layer is 300 nm to 700 nm.

11. The composite current collector according to any one of claims 1 to 10, wherein the inorganic particles comprise one or more of boehmite, silicon carbide, silicon oxide, aluminum oxide, calcium carbonate, titanium oxide, and graphene.

12. The composite current collector according to any one of claims 1 to 11, wherein the binder comprises one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide.

13. The composite current collector according to any one of claims 1 to 12, further comprising:
   a passivation layer disposed between the adhesive layer and the conductive layer.

14. The composite current collector according to claim 13, wherein a material of the passivation layer comprises one or more of chromate, dichromate, organic phosphonate, $Al_2O_3$, $SiO_2$, and $Si_3N_4$.

15. The composite current collector according to claim 14, wherein the chromate comprises one or more of sodium chromate, potassium chromate, magnesium chromate, and silver chromate.

16. The composite current collector according to claim 14 or 15, wherein the dichromate comprises one or more of sodium dichromate, potassium dichromate, magnesium dichromate, and silver dichromate.

17. The composite current collector according to any one of claims 14 to 16, wherein the organic phosphonate comprises one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

18. The composite current collector according to any one of claims 13 to 17, wherein a thickness of the passivation layer is 1 nm to 500 nm.

19. The composite current collector according to claim 18, wherein the thickness of the passivation layer is 10 nm to 200 nm.

20. The composite current collector according to any one of claims 1 to 19, wherein a material of the polymer support layer comprises one or more of polyamide, polyimide, polyethylene terephthalate, polybutylene terephthalate, polyethylene naphthalate, polycarbonate, polyethylene, polypropylene, propylene-ethylene copolymer, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers.

21. The composite current collector according to any one of claims 1 to 20, wherein a material of the conductive layer comprises one or more of aluminum, copper, nickel, titanium, silver, aluminum-zirconium alloy, graphite, acetylene black, graphene, and carbon nanotubes.

22. The composite current collector according to any one of claims 1 to 21, wherein a surface roughness of the conductive layer is Ra, and 0.1 $\mu$m < Ra < 2 $\mu$m.

23. An electrode sheet, comprising an active material layer and the composite current collector according to any one of claims 1 to 22, wherein the active material layer is disposed on a surface of the conductive layer facing away from the adhesive layer.

24. A secondary battery, comprising the composite current collector according to any one of claims 1 to 22 or the electrode sheet according to claim 23.

25. An electrical apparatus, comprising the secondary battery according to claim 24.

10

13
14
12

11

12
14
13

FIG. 1

10

13
14
122 }12
121

11

121 }12
122
14
13

FIG. 2

FIG. 3

FIG. 4

<u>5</u>

FIG. 5

<u>5</u>

53

52
52

51

FIG. 6

<u>6</u>

FIG. 7

## INTERNATIONAL SEARCH REPORT

| International application No. |
| --- |
| **PCT/CN2024/091990** |

| A. | CLASSIFICATION OF SUBJECT MATTER |
| --- | --- |

H01M4/64(2006.01)i;  H01M4/66(2006.01)i;  H01M10/052(2010.01)i

According to International Patent Classification (IPC) or to both national classification and IPC

| B. | FIELDS SEARCHED |
| --- | --- |

Minimum documentation searched (classification system followed by classification symbols)

IPC: H01M4/-, H01M10/-

Documentation searched other than minimum documentation to the extent that such documents are included in the fields searched

Electronic data base consulted during the international search (name of data base and, where practicable, search terms used)

CNTXT, ENTXTC, DWPI, VEN, CNKI, ISI_Web of Science: 电池, 集流体, 极片, 铝箔, 铜箔, 聚酰亚胺, 胶粘剂层, 粘结剂层, 粘接剂层, 胶层, 支撑层, 导电层, 金属层, 聚合物, 树脂, 层, battery, electrode sheet, current collector, aluminum foil, copper foil, adhesive layer, support layer, metal layer, layer, polymer, resin

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116802854 A (CONTEMPORARY AMPEREX TECHNOLOGY CO., LTD.) 22 September 2023 (2023-09-22)<br>claims 1-9 | 1-25 |
| A | CN 106099173 A (ZHEJIANG CHILWEE CHUANGYUAN INDUSTRIAL CO., LTD.) 09 November 2016 (2016-11-09)<br>description, paragraphs 6-17 | 1-25 |
| A | CN 113488661 A (LIYANG ZHUOYUE NEW MATERIAL TECHNOLOGY CO., LTD.) 08 October 2021 (2021-10-08)<br>entire document | 1-25 |
| A | CN 111900413 A (ZHUHAI COSMX BATTERY CO., LTD.) 06 November 2020 (2020-11-06)<br>entire document | 1-25 |
| A | CN 116646530 A (ZHEJIANG CHENGYING NEW MATERIAL CO., LTD. et al.) 25 August 2023 (2023-08-25)<br>entire document | 1-25 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 July 2024** | **31 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/091990** |

### C. DOCUMENTS CONSIDERED TO BE RELEVANT

| Category* | Citation of document, with indication, where appropriate, of the relevant passages | Relevant to claim No. |
|---|---|---|
| A | JP H11102708 A (ASAHI GLASS CO., LTD.) 13 April 1999 (1999-04-13)<br>entire document | 1-25 |
| A | KR 20010011032 A (FINECELL CO., LTD. et al.) 15 February 2001 (2001-02-15)<br>entire document | 1-25 |

**INTERNATIONAL SEARCH REPORT**
Information on patent family members

International application No.

**PCT/CN2024/091990**

| Patent document cited in search report | | | Publication date (day/month/year) | Patent family member(s) | | | Publication date (day/month/year) |
|---|---|---|---|---|---|---|---|
| CN | 116802854 | A | 22 September 2023 | None | | | |
| CN | 106099173 | A | 09 November 2016 | None | | | |
| CN | 113488661 | A | 08 October 2021 | None | | | |
| CN | 111900413 | A | 06 November 2020 | None | | | |
| CN | 116646530 | A | 25 August 2023 | None | | | |
| JP | H11102708 | A | 13 April 1999 | None | | | |
| KR | 20010011032 | A | 15 February 2001 | KR | 100339495 | B1 | 05 June 2002 |

Form PCT/ISA/210 (patent family annex) (July 2022)

**REFERENCES CITED IN THE DESCRIPTION**

**Patent documents cited in the description**

- CN 202311587415